# EUROPÄISCHE PATENTSCHRIFT

(11) **EP 0 787 169 B1**
(45) Veröffentlichungstag und Bekanntmachung des Hinweises auf die Patenterteilung: **22.12.1999**
(21) Anmeldenummer: 95935912.6
(22) Anmeldetag: 06.10.1995
(51) Int. Cl.: C09B 67/22, B41M 5/38

(54) **FARBSTOFFMISCHUNGEN, ENTHALTEND METHIN- UND AZOFARBSTOFFE**
METHINE AND AZO DYE-CONTAINING DYE MIXTURES
MELANGES DE COLORANTS CONTENANT DES COLORANTS AU METHINE ET DES COLORANTS AZOIQUES

(30) Priorität: 18.10.1994 DE 4437166
(43) Veröffentlichungstag der Anmeldung: 06.08.1997
(73) Patentinhaber: BASF AKTIENGESELLSCHAFT, 67056 Ludwigshafen (DE)
(72) Erfinder: ETZBACH, Karl-Heinz, D-67227 Frankenthal (DE); SENS, Rüdiger, D-68165 Mannheim (DE)
(86) Internationale Anmeldenummer: EP9503947
(87) Internationale Veröffentlichungsnummer: WO9611987

(56) Entgegenhaltungen:
- EP-A- 0 532 008
- EP-A- 0 569 785
- EP-A- 0 591 736

## Beschreibung

Die vorliegende Erfindung betrifft neue Farbstoffmischungen, enthaltend einen oder mehrere Pyridonfarbstoffe der Formel I 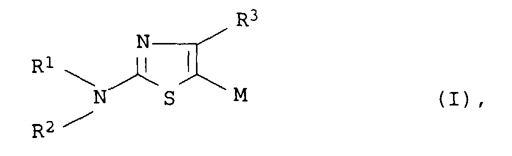 in der
- R¹ und R²: unabhängig voneinander jeweils für C₁-C₁₀-Alkyl, das gegebenenfalls durch C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder R¹ und R² zusammen mit dem sie verbindenden Stickstoffatom einen 5- oder 6-gliedrigen gesättigten heterocyclischen Rest, der weitere Heteroatome aufweisen kann,
- R³: für C₃-C₁₀-Alkyl, C₅-C₇-Cycloalkyl, gegebenenfalls durch C₁-C₄-Alkyl, C₁-C₄-Alkoxy, Halogen oder Nitro substituiertes Phenyl oder Thienyl und
- M: für einen Rest der Formel 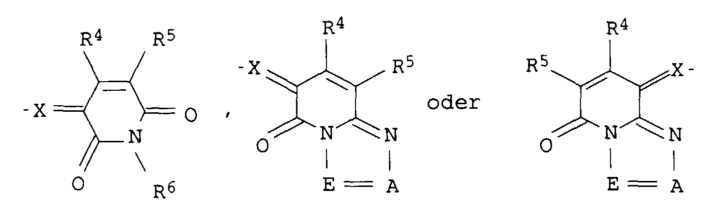 stehen,
worin
X CH,
R⁴ Wasserstoff, C₁-C₆-Alkyl oder gegebenenfalls durch C₁-C₄-Alkyl, C₁-C₄-Alkoxy, Halogen oder Nitro substituiertes Phenyl,
R⁵ Cyano, Carbamoyl, C₁-C₈-Mono- oder Dialkylcarbamoyl, Carboxyl, C₁-C₈-Alkoxycarbonyl oder Benzimidazolyl,
R⁶ Wasserstoff, C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl, gegebenenfalls durch C₁-C₄-Alkyl, C₁-C₄-Alkoxy, Halogen oder Nitro substituiertes Phenyl, oder einen Rest der Formel NB¹B², worin B¹ und B² unabhängig voneinander jeweils die Bedeutung von wasserstoff, C₁-C₁₀-Alkyl, gegebenenfalls durch C₁-C₄-Alkyl, C₁-C₄-Alkoxy, Halogen oder Nitro substituiertem Phenyl, C₁-C₉-Alkanoyl, C₁-C₈-Alkylsulfonyl, gegebenenfalls durch C₁-C₄-Alkyl, C₁-C₄-Alkoxy, Halogen oder Nitro substituiertem Phenylsulfonyl, Pyridylsulfonyl, gegebenenfalls durch C₁-C₄-Alkyl, C₁-C₄-Alkoxy, Halogen oder Nitro substituiertem Benzoyl, Pyridylcarbonyl oder Thienylcarbonyl besitzen, und
einer der beiden Reste A und E Stickstoff und der andere einen Rest der Formel C-R⁷, worin R⁷ die Bedeutung von C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy, Halogen oder Nitro substituiertem Phenyl besitzt, bedeuten,
sowie einen oder mehrere Azofarbstoffe der Formel II

D - N = N - K (II),

in der
- D: für einen Rest der Formel 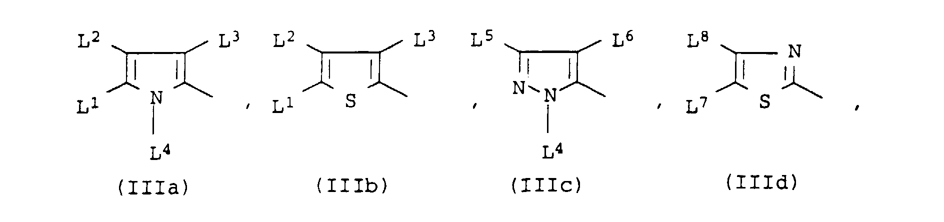 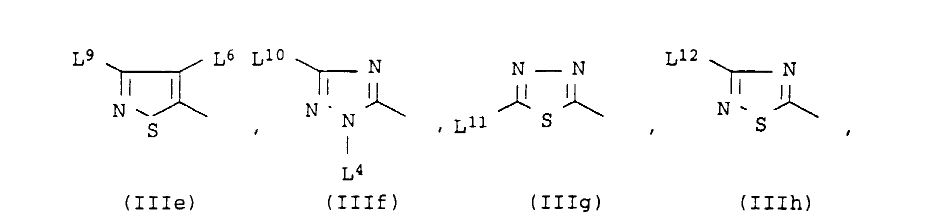 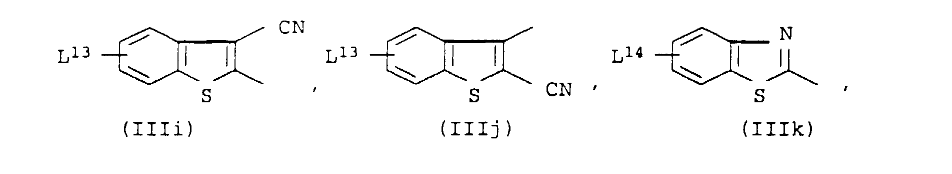 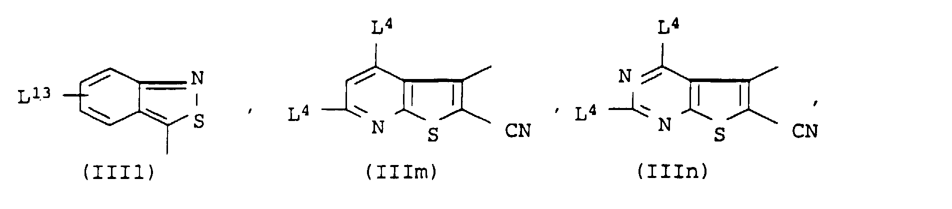 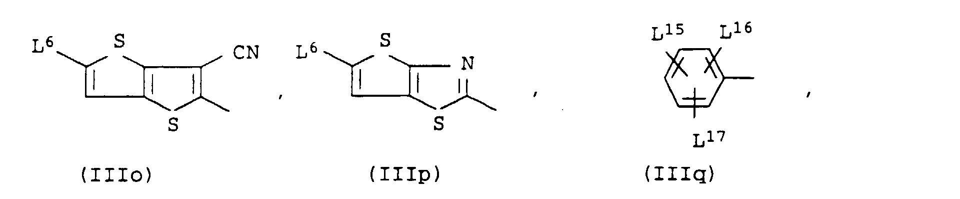 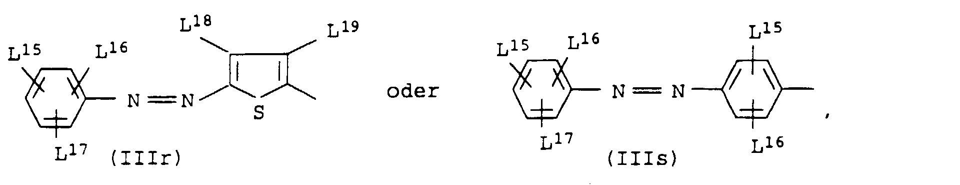
worin
- L¹: Nitro, Cyano, C₁-C₆-Alkanoyl, Benzoyl, C₁-C₈-Alkoxycarbonyl, C₁-C₈-Alkylsulfonyl, gegebenenfalls durch C₁-C₄-Alkyl, C₁-C₄-Alkoxy, Halogen oder Nitro substituiertes Phenylsulfonyl oder einen Rest der Formel -CH=T, worin T die Bedeutung von Hydroxyimino, C₁-C₄-Alkoxyimino oder eines Restes einer CH-aciden Verbindung H₂T besitzt,
- L²: Wasserstoff, C₁-C₆-Alkyl gegebenenfalls durch C₁-C₄-Alkyl, C₁-C₄-Alkoxy, Halogen oder Nitro substituiertes Phenyl, Halogen, Hydroxy, Mercapto, gegebenenfalls durch Phenyl oder C₁-C₄-Alkoxy substituiertes C₁-C₆-Alkoxy, gegebenenfalls durch C₁-C₄-Alkyl, C₁-C₄-Alkoxy, Halogen oder Nitro substituiertes Phenoxy, gegebenenfalls durch Phenyl substituiertes C₁-C₈-Alkylthio, gegebenenfalls durch C₁-C₄-Alkyl, C₁-C₄-Alkoxy, Halogen oder Nitro substituiertes Phenylthio, C₁-C₈-Alkylsulfonyl oder gegebenenfalls durch C₁-C₄-Alkyl, C₁-C₄-Alkoxy, Halogen oder Nitro substituiertes Phenylsulfonyl,
- L³: Cyano, C₁-C₈-Alkoxycarbonyl oder Nitro,
- L⁴: Wasserstoff, C₁-C₆-Alkyl, Phenyl oder Tolyl,
- L⁵: C₁-C₆-Alkyl, Phenyl oder Tolyl,
- L⁶: Wasserstoff, Cyano, C₁-C₈-Alkoxycarbonyl, C₁-C₆-Alkanoyl, Thiocyanato, Halogen oder Nitro,
- L⁷: Nitro, Cyano, C₁-C₆-Alkanoyl, Benzoyl, C₁-C₈-Alkoxycarbonyl, C₁-C₈-Alkylsulfonyl, gegebenenfalls durch C₁-C₄-Alkyl, C₁-C₄-Alkoxy, Halogen oder Nitro substituiertes Phenylsulfonyl oder einen Rest der Formel -CH=T, worin T die obengenannte Bedeutung besitzt,
- L⁸: Wasserstoff, C₁-C₆-Alkyl, gegebenenfalls durch C₁-C₄-Alkyl, C₁-C₄-Alkoxy, Halogen oder Nitro substituiertes Phenyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₈-Alkylthio, gegebenenfalls durch C₁-C₄-Alkyl, C₁-C₄-Alkoxy, Halogen oder Nitro substituiertes Phenylthio, C₁-C₈-Alkylsulfonyl, gegebenenfalls durch C₁-C₄-Alkyl, C₁-C₄-Alkoxy, Halogen oder Nitro substituiertes Phenylsulfonyl oder C₁-C₈-Alkoxycarbonyl,
- L⁹: Cyano, gegebenenfalls durch Phenyl substituiertes C₁-C₆-Alkyl, gegebenenfalls durch Phenyl substituiertes C₁-C₈-Alkoxy, gegebenenfalls durch Phenyl substituiertes C₁-C₈-Alkylthio, gegebenenfalls durch C₁-C₄-Alkyl, C₁-C₄-Alkoxy, Halogen oder Nitro substituiertes Phenyl, Thienyl, C₁-C₄-Alkylthienyl, Pyridyl oder C₁-C₄-Alkylpyridyl,
- L¹⁰: Phenyl, Tolyl oder Pyridyl,
- L¹¹: Trifluormethyl, Nitro, C₁-C₆-Alkyl, Phenyl, gegebenenfalls durch Phenyl substituiertes C₁-C₈-Alkylthio oder C₁-C₆-Dialkylamino,
- L¹²: C₁-C₆-Alkyl, Phenyl, gegebenenfalls durch Phenyl substituiertes C₁-C₈-Alkylthio, 2-Cyanoethylthio oder 2-(C₁-C₆-Alkoxycarbonyl)ethylthio,
- L¹³: Wasserstoff, Nitro oder Halogen,
- L¹⁴: Wasserstoff, Cyano, C₁-C₈-Alkoxycarbonyl, Nitro oder Halogen,
- L¹⁵, L¹⁶ und L¹⁷: unabhängig voneinander jeweils wasserstoff, C₁-C₆-Alkyl, C₁-C₆-Alkoxy, Halogen, Nitro, Cyano, gegebenenfalls durch Phenoxy substituiertes C₁-C₈-Alkoxycarbonyl, C₁-C₈-Alkylsulfonyl oder gegebenenfalls durch C₁-C₄-Alkyl, C₁-C₄-Alkoxy, Halogen oder Nitro substituiertes Phenylsulfonyl oder L¹⁵ und L¹⁶ zusammen einen Rest der Formel CO-NW-CO, worin W die Bedeutung von C₁-C₁₀-Alkyl, besitzt, das durch 1 bis 4 Sauerstoffatome in Etherfunktion unterbrochen sein kann und gegebenenfalls durch Hydroxy substituiert ist,
- L¹⁸: Wasserstoff, Methyl oder Chlor und
- L¹⁹: Cyano oder C₁-C₈-Alkoxycarbonyl bedeuten, und
- K: für einen Rest der Formel 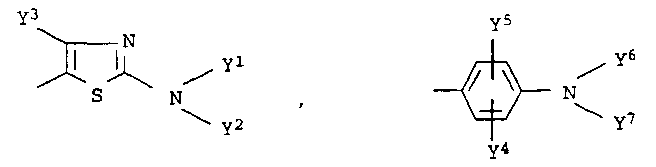 oder 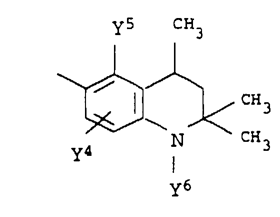 stehen,
worin
- Y¹: und Y² unabhängig voneinander jeweils C₁-C₁₀-Alkyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-cycloalkyl, C₃-C₄-Alkenyl, gegebenenfalls durch C₁-C₄-Alkyl, C₁-C₄-Alkoxy, Halogen oder Nitro substituiertes Phenyl oder Y¹ und Y² zusammen mit dem sie verbindenden Stickstoffatom einen 5- oder 6-gliedrigen gesättigten heterocyclischen Rest, der weitere Heteroatome aufweisen kann,
- Y³: C₃-C₁₀-Alkyl, C₅-C₇-Cycloalkyl, gegebenenfalls durch C₁-C₄-Alkyl, C₁-C₄-Alkoxy, Halogen oder Nitro substituiertes Phenyl oder Thienyl,
- Y⁴: wasserstoff, C₁-C₁₀-Alkyl, das gegebenenfalls durch 1 bis 4 Sauerstoffatome in Etherfunktion unterbrochen ist, Hydroxy, C₁-C₆-Alkoxy, insbesondere Methoxy oder Ethoxy, C₁-C₄-Alkylsulfonylamino, C₁-C₈-Mono- oder Dialkylaminosulfonylamino oder den Rest -NHCOY⁸ oder -NHCO₂Y⁸, wobei Y⁸ die Bedeutung von Phenyl, Benzyl, Tolyl oder C₁-C₁₀-Alkyl, das gegebenenfalls durch 1 bis 4 Sauerstoffatome in Etherfunktion unterbrochen ist, besitzt,
- Y⁵: Wasserstoff, C₁-C₆-Alkyl oder C₁-C₆-Alkoxy und
- Y⁶ und Y⁷: unabhängig voneinander jeweils Wasserstoff, C₁-C₁₀-Alkyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder Y¹ und Y² zusammen mit dem sie verbindenden Stickstoffatom einen 5- oder 6-gliedrigen gesättigten heterocyclischen Rest, der weitere Heteroatome aufweisen kann, bedeuten,
sowie ein Verfahren zum thermischen Transfer dieser Farbstoffe
Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Es ist bekannt, das Thermotransferdruckverfahren mit einzelnen Farbstoffen oder auch mit Mischungen von Farbstoffen durchzuführen. Dabei hat sich jedoch gezeigt, daß die zur Anwendung kommenden Farbstoffe häufig noch anwendungstechnische Mängel aufweisen.

Die EP-A-569 785 und EP-A-591 736 beschreiben ebenfalls Farbstoffmischungen.

Aufgabe der vorliegenden Erfindung war es daher, neue Farbstoffmischungen im blauen und roten Farbbereich bereitzustellen, die sich in vorteilhafter Weise zur thermischen Übertragung eignen.

Demgemäß wurden die eingangs näher bezeichneten Farbstoffmischungen gefunden.

Alle in den obengenannten Formeln auftretenden Alkyl- und Alkenylgruppen können sowohl geradkettig als auch verzweigt sein.

Wenn in den obengenannten Formeln substituierte Alkylgruppen auftreten, so weisen sie in der Regel 1 oder 2 Substituenten auf.

Wenn in den obengenannten Formeln substituierte Phenyl-, Pyridyl- oder Thienylgruppen auftreten, so weisen sie in der Regel 1 bis 3, vorzugsweise 1 oder 2, Substituenten auf.

Reste B¹, B², L², L⁴, L⁵, L⁸, L⁹, L¹¹, L¹², L¹⁵, L¹⁶, L¹⁷, R¹, R², R⁴, R⁶, R⁷, Y¹, Y², Y⁴, Y⁵, Y⁶, Y⁷, Y⁸ und W sind z.B. Methyl oder Ethyl.

Reste R³ und Y³ sind, wie weiterhin auch die Reste B¹, B², L², L⁴, L⁵, L⁸, L⁹, L¹¹, L¹², L¹⁵, L¹⁶, L¹⁷, R¹, R², R⁴, R⁶, R⁷, Y¹, Y², Y⁴, Y⁵, Y⁶, Y⁷, Y⁸ und W, Propyl, Isopropyl, Butyl, Isobutyl, sec-Butyl, tert-Butyl, Pentyl, Isopentyl, Neopentyl, tert-Pentyl, Hexyl oder 2-Methylpentyl.

Reste B¹, B², R¹, R², R³, R⁶, R⁷, Y¹, Y², Y³, Y⁴, Y⁶, Y⁷, R⁸ und W sind weiterhin z.B. Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5^{th} Edition, Vol. A 1, Seiten 290 bis 293, sowie Vol. A 10, Seiten 284 und 285).

Reste R¹, R², R³, R⁶, R⁷, Y¹, Y², Y³, Y⁶ und Y⁷ sind weiterhin z.B. Cyclopentyl, Methylcyclopentyl, Dimethylcyclopentyl, Cyclohexyl, Methylcyclohexyl oder Cycloheptyl.

Reste R¹, R², R⁶, R⁷, Y¹, Y², Y⁴, Y⁶, Y⁷, Y⁸ und W sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxyundecyl, 3,6,9,12-Tetraoxatridecyl oder 3,6,9,12-Tetraoxatetradecyl.

Reste R¹, R², Y¹, Y², Y⁶ und Y⁷ sind weiterhin z.B. 2-Methoxycarbonylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 3-Propoxycarbonylpropyl, 2- oder 3-Butoxycarbonylpropyl, 2- oder 4-Methoxycarbonylbutyl, 2- oder 4-Ethoxycarbonylbutyl, 2- oder 4-Propoxycarbonylbutyl, 2- oder 4-Butoxycarbonylbutyl, 2-Methoxycarbonyloxyethyl, 2-Ethoxycarbonyloxyethyl, 2-Propoxycarbonyloxyethyl, 2-Isopropoxycarbonyloxyethyl, 2-Butoxycarbonyloxyethyl, 2- oder 3-Methoxycarbonyloxypropyl, 2- oder 3-Ethoxycarbonyloxypropyl, 2- oder 3-Propoxycarbonyloxypropyl, 2- oder 3-Butoxycarbonyloxypropyl, 2- oder 4-Methoxycarbonyloxybutyl, 2- oder 4-Ethoxycarbonyloxybutyl, 2- oder 4-Propoxycarbonyloxybutyl, 2- oder 4-Butoxycarbonyloxybutyl, Prop-1-en-3-yl, But-2-en-4-yl oder 2-Methylprop-1-en-3-yl.

Reste R⁶ und R⁷ sind weiterhin z.B. 2-Benzyloxyethyl, 2-Pyrazol-l-yl-ethyl, 2- oder 3-Benzyloxypropyl, 2- oder 3-Pyrazol-1-ylpropyl, 2- oder 4-Benzyloxybutyl, 2- oder 4-Pyrazol-1-ylbutyl, 2-Phenoxyethyl, 2- oder 3-Phenoxypropyl, 2- oder 4-Phenoxybutyl, 2-cyclohexyloxyethyl, 2- oder 3-Cyclohexyloxypropyl oder 2- oder 4-Cyclohexyloxybutyl.

Reste Y¹, Y², Y⁶ und Y⁷ sind weiterhin z.B. 2-Cyanoethyl, 2- oder 3-Cyanopropyl, 2- oder 4-Cyanobutyl, 2-Hydroxyethyl, 2- oder 3-Hydroxypropyl, 2- oder 4-Hydroxybutyl, 2-Chlorethyl, 2- oder 3-Chlorpropyl, 2- oder 4-Chlorbutyl, 2-Acetyloxyethyl, 2- oder 3-Acetyloxypropyl, 2- oder 4-Acetyloxybutyl, 2-Propionyloxyethyl, 2- oder 3-Propionyloxypropyl oder 2- oder 4-Propionyloxybutyl.

Reste L⁹, R¹, R², R⁶, R⁷, Y¹, Y², Y⁶ und Y⁷ sind weiterhin z.B. Benzyl oder 1- oder 2-Phenylethyl.

Reste B¹, B², L², L⁸, L⁹, R¹, R², R³, R⁴, R⁶, R⁷, Y¹, Y², Y³, Y⁶ oder Y⁷ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,3-, 2,4- oder 2,6-Dimethylphenyl, 2-, 3- oder 4-Methoxyphenyl, 2-, 3- oder 4-Ethoxyphenyl, 2,3-, 2,4- oder 2,6-Dimethoxyphenyl, 2-, 3- oder 4-Fluorphenyl, 2-, 3- oder 4-Chlorphenyl, 2-, 3- oder 4-Bromphenyl oder 2-, 3- oder 4-Nitrophenyl.

Reste R⁵ sind z.B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, Mono- oder Dipentylcarbamoyl, Mono- oder Dihexylcarbamoyl, Mono- oder Diheptylcarbamoyl, Mono- oder Dioctylcarbamoyl, Mono- oder Bis(2-ethylhexyl)carbamoyl oder N-Methyl-N-ethylcarbamoyl.

Reste L², L⁸, L⁹ und L¹¹ sind weiterhin z.B. Methylthio, Ethylthio, Propylthio, Isopropylthio, Butylthio, Isobutylthio, Pentylthio, Hexylthio, Heptylthio, Octylthio, 2-Ethylhexylthio, Benzylthio oder 1- oder 2-Phenylethylthio.

Reste L² und L⁸ sind weiterhin z.B. Phenylthio, 2-Methylphenylthio, 2-Methoxyphenylthio oder 2-Chlorphenylthio.

Reste L², L⁸, L⁹, L¹⁵, L¹⁶, L¹⁷, Y⁴ und Y⁵ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L², L⁸ und L⁹ sind weiterhin z.B. Benzyloxy oder 1- oder 2-Phenylethoxy.

Reste L⁶ sind, wie weiterhin auch Reste L², L⁸, L¹³, L¹⁴, L¹⁵, L¹⁶ und L¹⁷, z.B. Fluor, Chlor oder Brom.

Reste L⁷ und L¹ sind, wie weiterhin auch Reste B¹, B², L², L⁸, L¹⁵, L¹⁶ und L¹⁷, z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Heptylsulfonyl, Octylsulfonyl, 2-Ethylhexylsulfonyl, Phenylsulfonyl, 2-Methylphenylsulfonyl, 2-Methoxyphenylsulfonyl oder 2-Chlorphenylsulfonyl.

Reste L³ und L¹⁹ sind, wie weiterhin auch Reste L¹, L⁶, L⁷, L⁸, L¹⁴, L¹⁵, L¹⁶, L¹⁷ und R⁵, z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, Hexyloxycarbonyl, Heptyloxycarbonyl, Octyloxycarbonyl, Isooctyloxycarbonyl oder 2-Ethylhexyloxycarbonyl.

Reste L¹⁵, L¹⁶ und L¹⁷ sind weiterhin z.B. 2-Phenoxyethoxycarbonyl, 2- oder 3-Phenoxypropoxycarbonyl oder 2- oder 4-Phenoxybutoxycarbonyl.

Reste L² und L⁸ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy oder 6-Ethoxyhexyloxy.

Reste L¹¹ sind weiterhin z.B. Dimethylamino, Diethylamino, Dipropylamino, Diisopropylamino, Dibutylamino, Dipentylamino, Dihexylamino oder N-Methyl-N-ethylamino.

Reste L¹² sind weiterhin z.B. 2-Methoxycarbonylethylthio oder 2-Ethoxycarbonylethylthio.

Reste L⁹ sind weiterhin z.B. 2- oder 3-Methylthienyl oder 2-, 3- oder 4-Methylpyridyl.

Reste B¹, B², L¹, L⁶ und L⁷ sind weiterhin z.B. Formyl, Acetyl, Propionyl, Butyryl, Pentanoyl oder Hexanoyl.

Reste B¹ und B² sind weiterhin z.B. Heptanoyl, Octanoyl, 2-Ethylhexanoyl, Isooctanoyl, Nonanoyl, Isononanoyl, Benzoyl, 2-, 3- oder 4-Methylbenzol oder 2-, 3- oder 4-Methoxybenzoyl.

Reste Y⁴ sind weiterhin z.B. Acetylamino, Propionylamino, Methoxyacetylamino, Benzoylamino, Methoxycarbonylamino, Ethoxycarbonylamino, Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl) amino.

Wenn L¹ oder L⁷ für den Rest -CH=T stehen, worin T sich von einer CH-aciden Verbindung H₂T ableitet, können als CH-acide Verbindungen H₂T z.B. Verbindungen der Formel 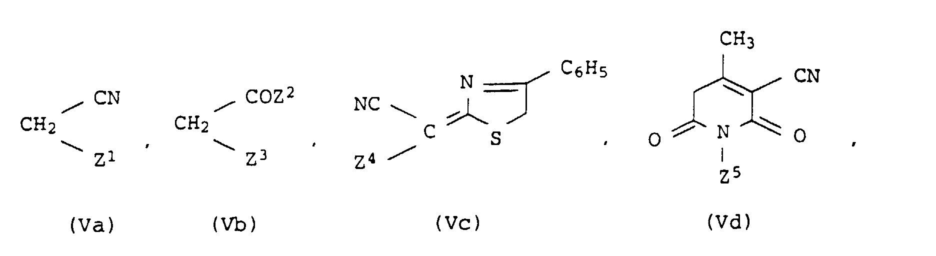 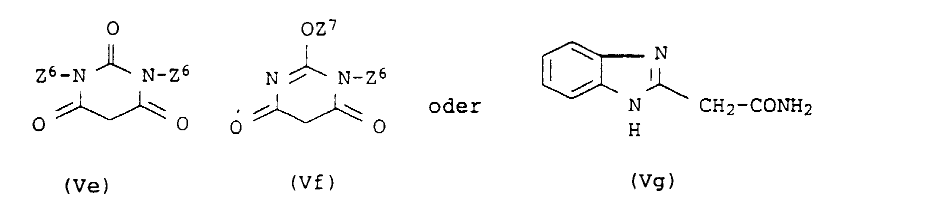 in Betracht kommen, wobei
- Z¹: Cyano, Nitro, C₁-C₄-Alkanoyl, gegebenenfalls durch C₁-C₄-Alkyl, C₁-C₄-Alkoxy, Halogen oder Nitro substituiertes Benzoyl, C₁-C₄-Alkylsulfonyl, gegebenenfalls durch C₁-C₄-Alkyl, C₁-C₄-Alkoxy, Halogen oder Nitro substituiertes Phenylsulfonyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls durch C₁-C₄-Alkyl, C₁-C₄-Alkoxy, Halogen oder Nitro substituiertes Phenylcarbamoyl, gegebenenfalls durch C₁-C₄-Alkyl, C₁-C₄-Alkoxy, Halogen oder Nitro substituiertes Phenyl, Benzthiazol-2-yl, Benzimidazol-2-yl, 5-Phenyl-1,3,4-thiadiazol-2-yl oder 2-Hydroxychinoxalin-3-yl,
- Z²: C₁-C₆-Alkyl, C₁-C₆-Alkoxy oder C₃-C₄-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₆-Alkyl oder Phenyl und
- Z⁷: C₁-C₆-Alkyl bedeuten.

Dabei ist der Rest, der sich von Verbindungen der Formel Va, Vb oder Vc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest, der sich von Verbindungen der Formel Va, Vb oder Vc ableitet, worin Z¹ Cyano, C₁-C₄-Alkoxycarbonyl oder C₃-C₄-Alkenyloxycarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Wenn die Reste R¹ und R², Y¹ und Y² oder Y⁶ und Y⁷ jeweils zusammen mit dem sie verbindenden Stickstoffatom einen 5- oder 6-gliedrigen gesättigten heterocyclischen Rest, der gegebenenfalls weitere Heteroatome enthält, bedeuten, so können dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht kommen.

Wenn die Reste R¹ und R² in Formel I jeweils C₁-C₁₀-Alkyl bedeuten oder wenn einer der Reste R¹ und R² C₁-C₁₀-Alkyl und der andere C₅-C₇-Cycloalkyl bedeutet, so sind solche Pyridonfarbstoffe in den Farbstoffmischungen bevorzugt, in der die Summe der in den beiden Resten R¹ und R² vorhandenen Kohlenstoffatome mindestens 7, vorzugsweise mindestens 8, beträgt.

Weiterhin bevorzugt sind Farbstoffmischungen, die einen oder mehrere Pyridonfarbstoffe der Formel I enthalten, in der R⁴ Methyl bedeutet.

Weiterhin bevorzugt sind Farbstoffmischungen, die einen oder mehrere Pyridonfarbstoffe der Formel I enthalten, in der R⁵ Cyano bedeutet.

Weiterhin bevorzugt sind Farbstoffmischungen, die einen oder mehrere Pyridonfarbstoffe der Formel I enthalten, in der R³ C₃-C₁₀-Alkyl, insbesondere C₃-C₈-Alkyl, wobei verzweigtes Alkyl jeweils hervorzugheben ist, Phenyl oder Thienyl bedeutet.

Weiterhin bevorzugt sind Farbstoffmischungen, die einen oder mehrere Pyridonfarbstoffe der Formel I enthalten, in der R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

Weiterhin bevorzugt sind Farbstoffmischungen, die einen oder mehrere Pyridonfarbstoffe der Formel I enthalten, in der R⁷ C₁-C₈-Alkyl oder gegebenenfalls durch C₁-C₄-Alkyl oder C₁-C₄-Alkoxy substituiertes Phenyl bedeutet.

Weiterhin bevorzugt sind Farbstoffmischungen, die einen oder mehrere Pyridonfarbstoffe der Formel I enthalten, in der R¹ und R² unabhängig voneinander jeweils C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl bedeuten.

Besonders bevorzugt sind Farbstoffmischungen, die einen oder mehrere Pyridonfarbstoffe der Formel I enthalten, in der R³ verzweigtes C₃-C₆-Alkyl, insbesondere Isopropyl, Isobutyl oder tert-Butyl, bedeutet. Tert-Butyl ist besonders zu nennen.

Weiterhin besonders bevorzugt sind Farbstoffmischungen, die einen oder mehrere Pyridonfarbstoffe der Formel I enthalten, in der R⁶ C₄-C₈-Alkyl oder Cyclohexyl bedeutet.

Weiterhin besonders bevorzugt sind Farbstoffmischungen, die einen oder mehrere Pyridonfarbstoffe der Formel I enthalten, in der R⁷ C₁-C₈-Alkyl bedeutet.

Weiterhin besonders bevorzugt sind Farbstoffmischungen, die einen oder mehrere Pyridonfarbstoffe der Formel I enthalten, in der R¹ und R² unabhängig voneinander jeweils C₄-C₈-Alkyl, C₁-C₄-Alkoxy-C₂-C₄-alkyl, C₁-C₄-Alkoxycarbonyl-C₂-C₄-alkyl, Benzyl oder Prop-1-en-3-yl bedeuten oder in der einer der beiden Reste R¹ und R² C₁-C₄-Alkyl und der andere Cyclohexyl bedeutet.

Weiterhin besonders bevorzugt sind Farbstoffmischungen, die einen oder mehrere Pyridonfarbstoffe der Formel I enthalten, in der M für einen Rest der Formel 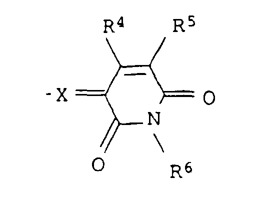 steht, worin R⁴, R⁵, R⁶ und X jeweils die obengenannte Bedeutung besitzen.

Ganz besonders bevorzugt sind Farbstoffmischungen, die einen oder mehrere Pyridonfarbstoffe der Formel I enthalten, in der R¹ und R² unabhängig voneinander jeweils C₄-C₈-Alkyl, Benzyl oder Prop-1-en-3-yl bedeutet.

Weiterhin bevorzugt sind Farbstoffmischungen, die einen oder mehrere Azofarbstoffe der Formel II enthalten, in der D für einen Rest der Formel IIIb, IIId, IIIe oder IIIq steht.

Weiterhin besonders bevorzugt sind Farbstoffmischungen, die einen oder mehrere Azofarbstoffe der Formel II enthalten, in der D für einen Rest der Formel IIIb, IIId, IIIe oder IIIq steht, worin
- L¹: Nitro, Cyano, Formyl oder einen Rest der der Formel -CH=T, worin T die obengenannte Bedeutung besitzt,
- L²: Wasserstoff, C₁-C₆-Alkyl oder Halogen,
- L³: Cyano, C₁-C₆-Alkoxycarbonyl oder Nitro,
- L⁶: Cyano oder Nitro,
- L⁷: Nitro, Cyano, Formyl, C₁-C₆-Alkoxycarbonyl oder einen Rest der Formel -CH=T, worin T die obengenannte Bedeutung besitzt,
- L⁸: C₁-C₆-Alkyl, gegebenenfalls durch C₁-C₄-Alkyl, C₁-C₄-Alkoxy, Halogen oder Nitro substituiertes Phenyl, Cyano, Halogen oder C₁-C₆-Alkoxycarbonyl,
- L⁹: gegebenenfalls durch Phenyl substituiertes C₁-C₆-Alkyl, gegebenenfalls durch Phenyl substituiertes C₁-C₆-Alkylthio oder gegebenenfalls durch C₁-C₄-Alkyl, C₁-C₄-Alkoxy, Halogen oder Nitro substituiertes Phenyl oder Thienyl und
- L¹⁵, L¹⁶ und L¹⁷: unabhängig voneinander jeweils Wasserstoff, C₁-C₆-Alkyl, C₁-C₆-Alkoxy, Nitro, Cyano oder gegebenenfalls durch Phenoxy substituiertes C₁-C₆-Alkoxycarbonyl oder L¹⁵ und L¹⁶ zusammen einen Rest der Formel CO-NW-CO, worin W die oben- genannte Bedeutung besitzt, bedeuten.

Von besonderer Bedeutung sind Farbstoffmischungen, die einen oder mehrere Azofarbstoffe der Formel II enthalten, in der D für einen Rest der Formel IIIe steht.

Weiterhin bevorzugt sind Farbstoffmischungen, die einen oder mehrere Azofarbstoffe der Formel II enthalten, in der Y¹, Y², Y⁶ und Y⁷ unabhängig voneinander jeweils C₁-C₆-Alkyl, das gegebenenfalls durch Hydroxy, C₁-C₄-Alkanoyloxy, C₁-C₄-Alkoxycarbonyl, C₁-C₄-Alkoxycarbonyloxy oder Phenyl substituiert ist und durch 1 oder 2 Sauerstoffatome in Etherfunktion unterbrochen sein kann.

Weiterhin bevorzugt sind Farbstoffmischungen, die einen oder mehrere Azofarbstoffe der Formel II enthalten, in der Y³ verzweigtes C₃-C₁₀-Alkyl bedeutet.

Weiterhin bevorzugt sind Farbstoffmischungen, die einen oder mehrere Azofarbstoffe der Formel II enthalten, in der Y⁵ Wasserstoff, C₁-C₄-Alkyl, Methoxy, Ethoxy oder C₁-C₆-Alkanoylamino bedeutet.

Die erfindungsgemäßen Farbstoffmischungen enthalten in der Regel 5 bis 95 Gew.-%, vorzugsweise 20 bis 80 Gew.-% und insbesondere 40 bis 60 Gew.-%, jeweils bezogen auf das Gewicht der Farbstoffmischung, eines oder mehrerer Pyridonfarbstoffe der Formel I sowie 5 bis 95 Gew.-%, vorzugsweise 20 bis 80 Gew.-% und insbesondere 40 bis 60 Gew.-%, jeweils bezogen auf das Gewicht der Farbstoffmischung, eines oder mehrerer Azofarbstoffe der Formel II.

Die neuen Farbstoffmischungen können nach an sich bekannten Methoden, z.B. durch Abmischen der Einzelfarbstoffe im obengenannten Gewichtsverhältnis erhalten werden.

Die Pyridonfarbstoffe der Formel I sind an sich bekannt und beispielsweise in der US-A-5 079 365, in den älteren Patentanmeldungen PCT/EP 94/04114, PCT/EP 95/00564 oder in der älteren deutschen Patentanmeldung 19504943.8 beschrieben oder können nach den dort genannten Methoden erhalten werden. Die thermische Übertragung solcher Farbstoffe ist z.B. in der älteren europäischen Patentanmeldung Nr. 95106055.7 beschrieben.

Die Azofarbstoffe der Formel II sind ebenfalls an sich bekannt und z.B. in der älteren deutschen Patentanmeldung P 44 26 023.7 beschrieben. Diejenigen Azofarbstoffe, die über eine Kupplungskomponente aus der Anilinreihe verfügen, können ebenfalls nach den dort genannten Methoden oder auch, wie in der US-A-5 283 326 beschrieben, erhalten werden.

Die erfindungsgemäßen Farbstoffmischungen zeichnen sich durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und gewährleisten eine flexible coloristische Anpassung an die restlichen subtraktiven Grundfarben, wodurch hochwertige Farbenräume resultieren. Außerdem erlauben die erfindungsgemäßen Farbstoffmischungen die Herstellung von guten Schwarzmischungen.

Hervorzuheben ist auch die spektral gleichmäßige Abnahme der Einzelkomponenten bei Bestrahlung, d.h. der Einzelfarbstoff mit der geringeren Lichtechtheit nimmt in der Regel nicht bevorzugt ab.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich eine eingangs näher bezeichnete Farbstoffmischung befindet.

Zur Herstellung der für das erfindungsgemäße Verfahren benötigten Farbstoffträger werden die Farbstoffmischungen in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält die Farbstoffe vorzugsweise in molekulardispers gelöster Form. Die Druckfarbe kann mittels einer Rakel auf den inerten Träger aufgetragen und die Färbung an der Luft getrocknet werden. Geeignete organische Lösungsmittel für die Farbstoffmischungen sind z.B. solche, in denen die Löslichkeit der Farbstoffmischungen bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne daß dabei eine sichtbare Auskristallisation der Farbstoffmischung auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel: Farbstoffmischung beträgt im allgemeinen 1:1 bis 10:1.

Als Hilfsmittel kommen z.B. Trennmittel in Betracht, wie sie in der US-A-5 132 438 oder den entsprechend dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoffträgers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffmischungen eignen sich weiterhin vorteilhaft zum Färben oder Bedrucken von synthetischen Materialien, z.B. von Polyestern, Polyamiden oder Polycarbonaten. Insbesondere zu nennen sind textile Materialien, wie Fasern, Garne, Zwirne, Maschenware, Webware oder Non-wovens aus Polyester, modifiziertem Polyester, z.B. anionisch modifiziertem Polyester, oder Mischgewebe von Polyestern mit Cellulose, Baumwolle, Viskose oder Wolle. Die Färbe- und Druckbedingungen sind an sich bekannt. Die erfindungsgemäßen Farbstoffe können auch zum Färben von keratinischen Fasern, z.B. bei der Haarfärbung oder der Färbung von Pelzen, verwendet werden.

Die neuen Farbstoffmischungen eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

In den folgenden Tabellen 1 bis 5 sind die Einzelfarbstoffe aufgeführt, die als Mischungspartner dienten.

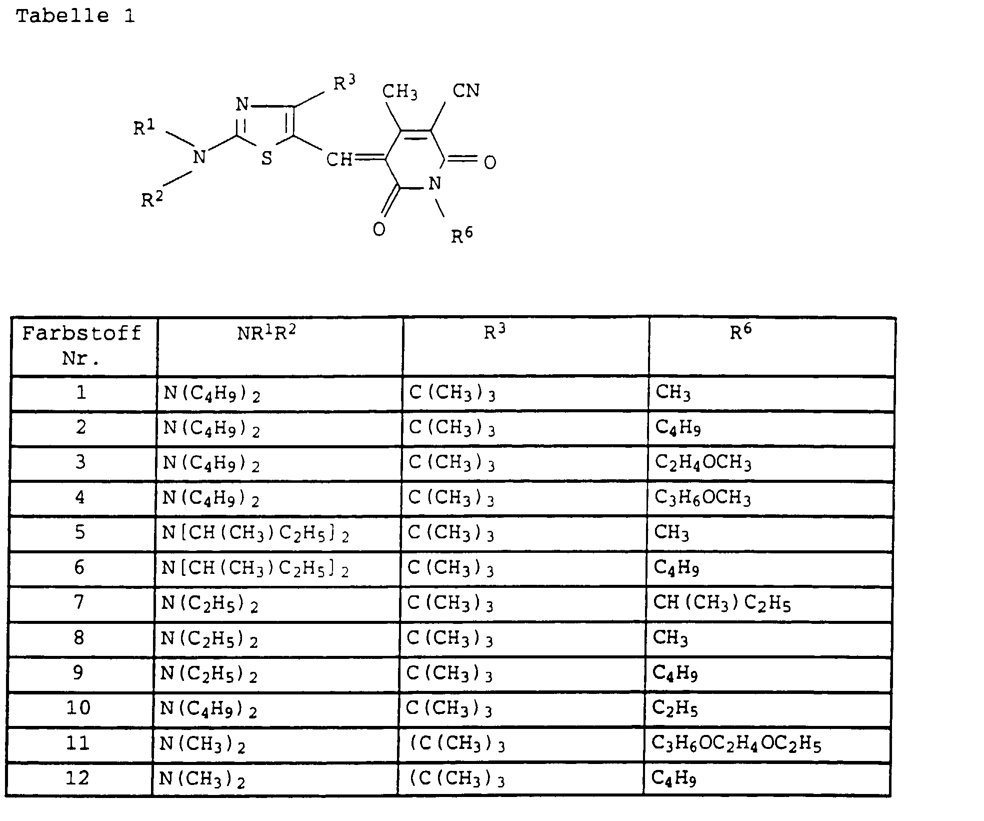

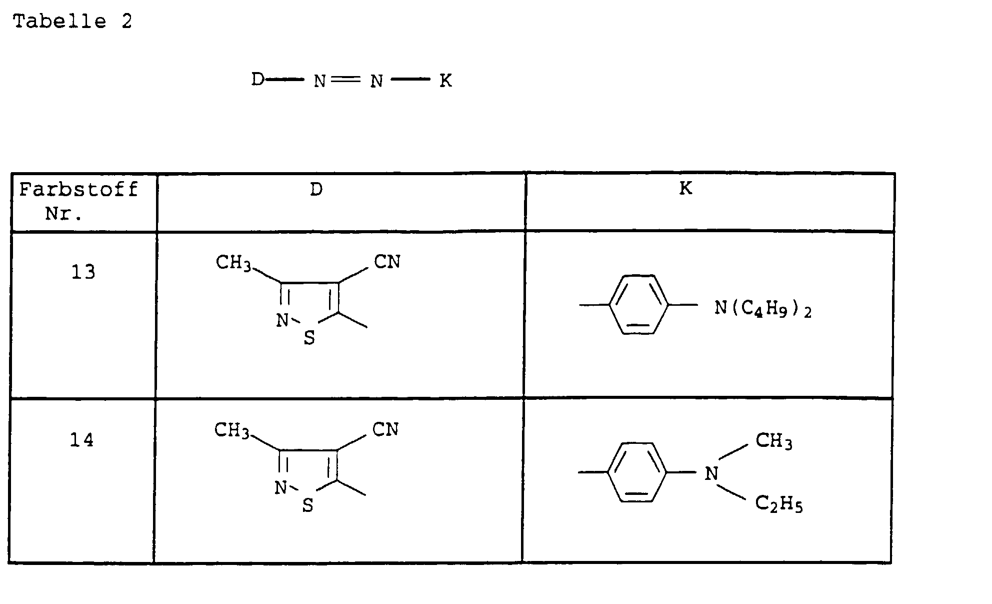

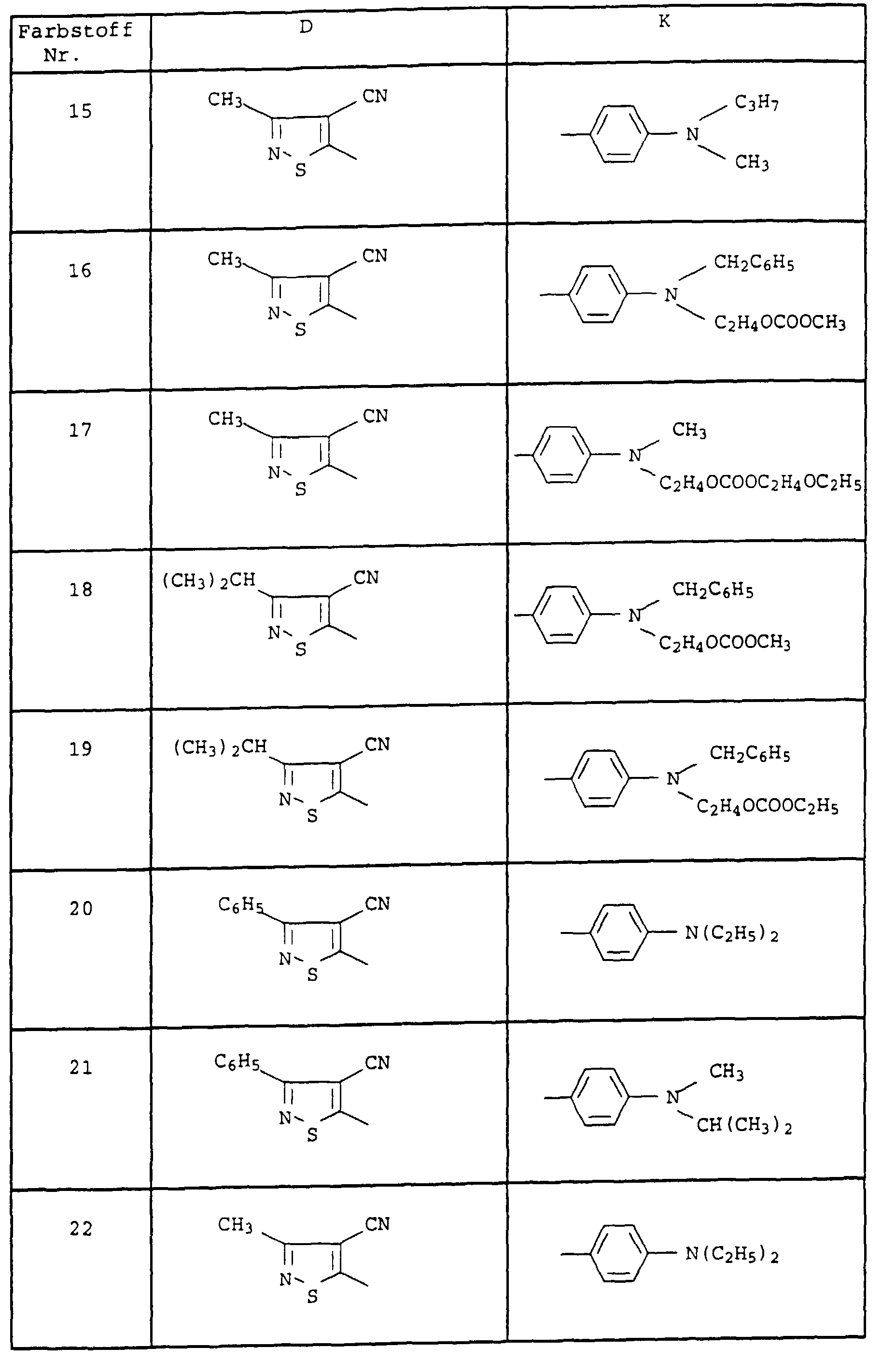

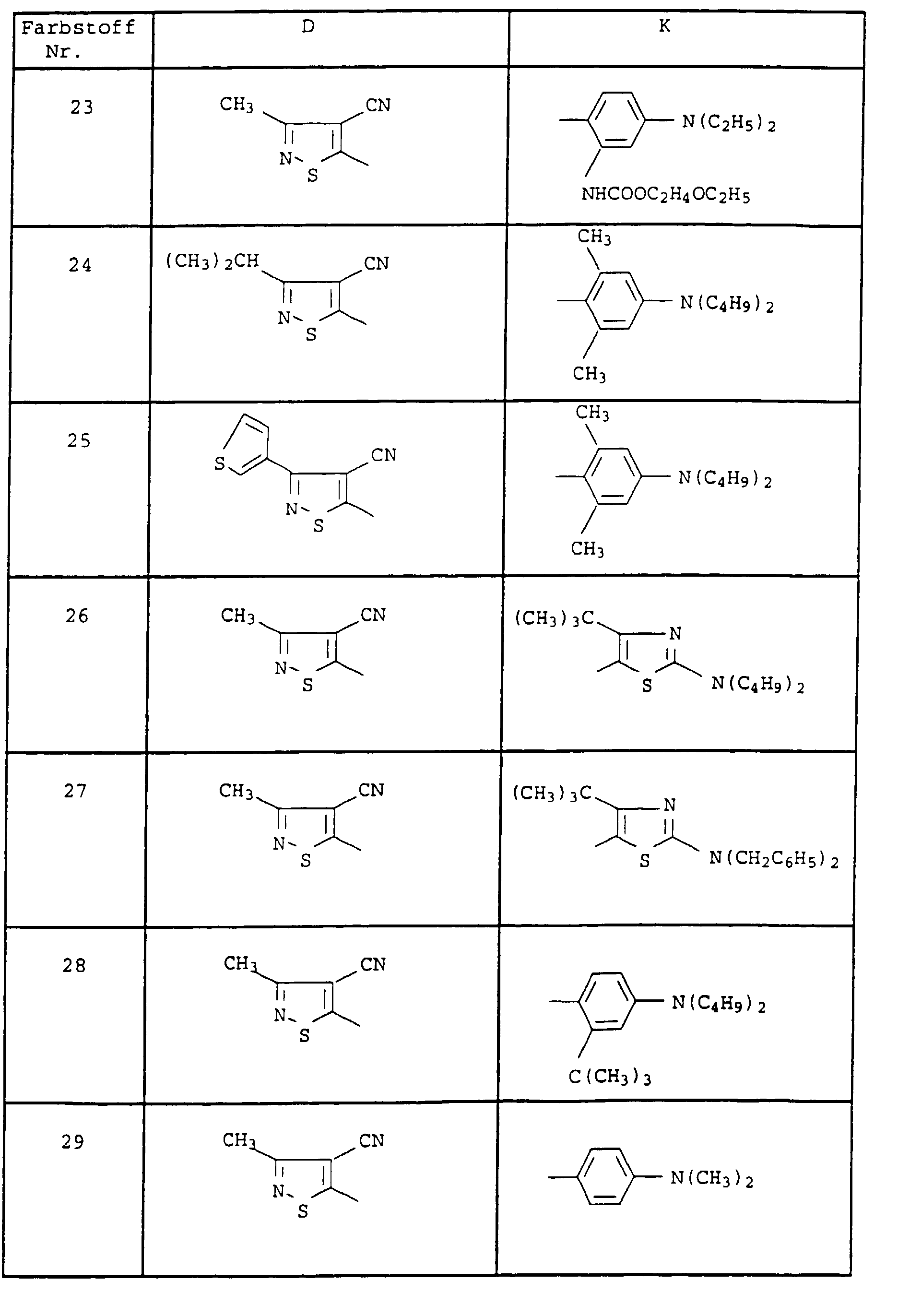

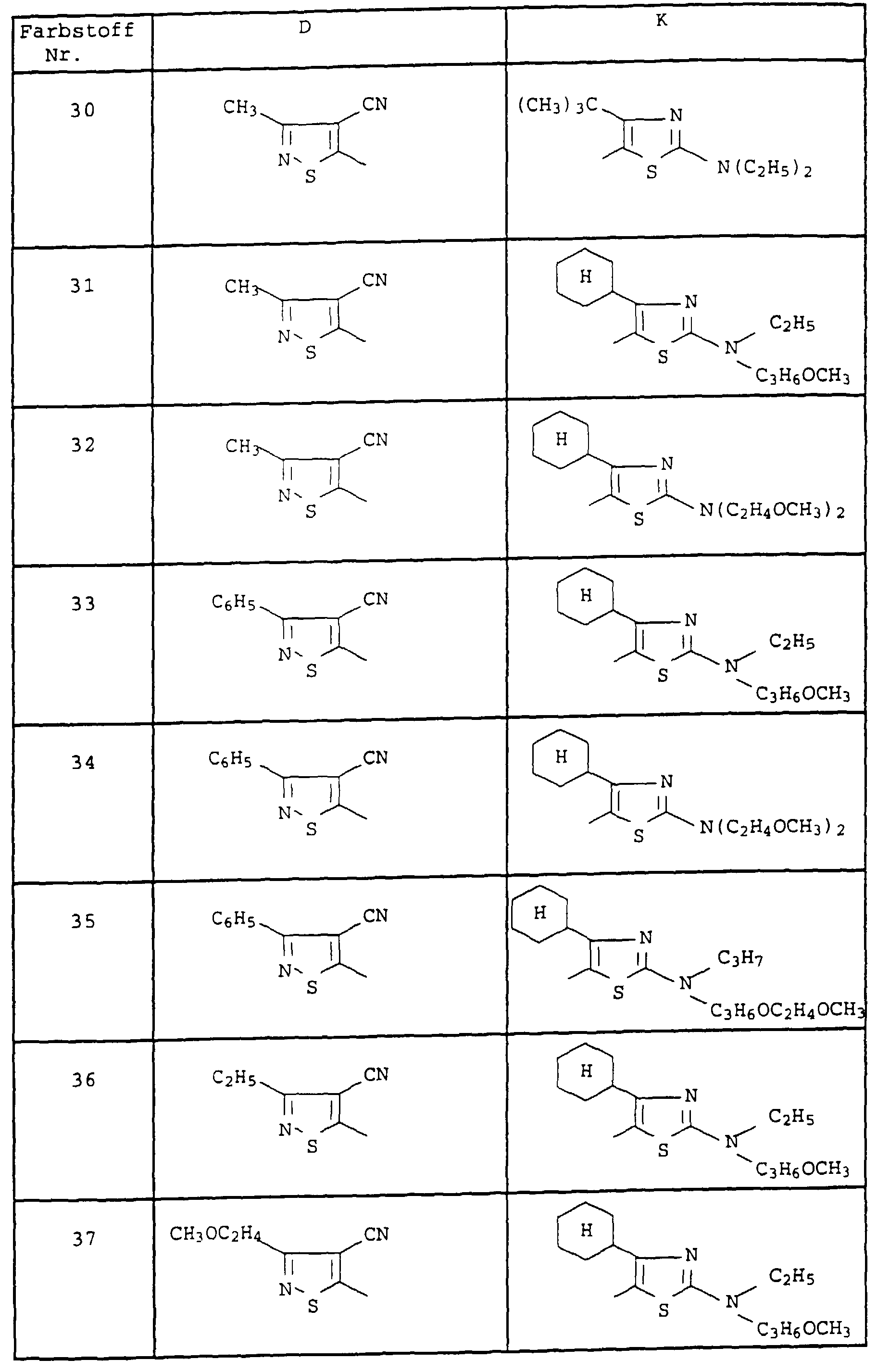

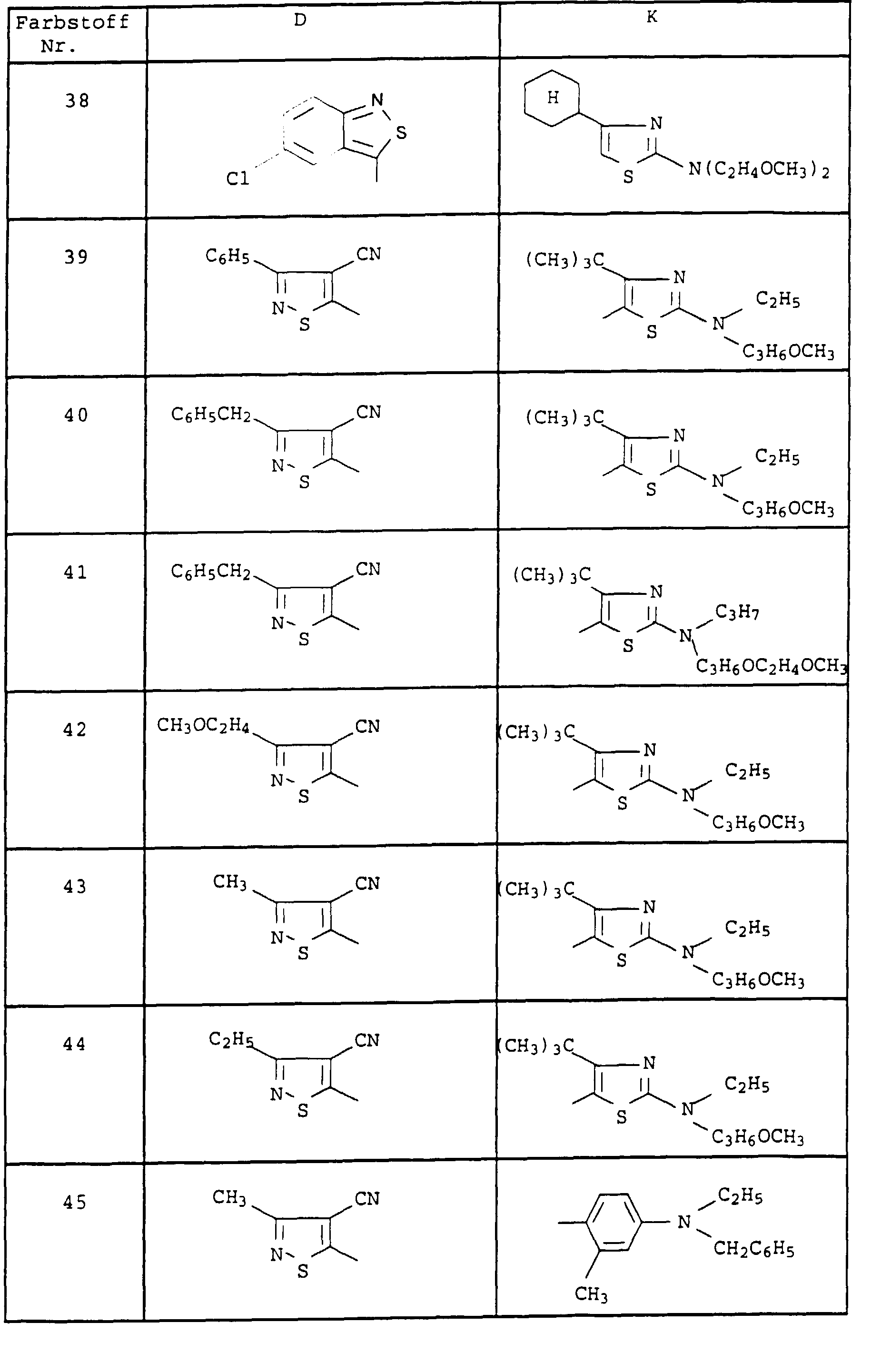

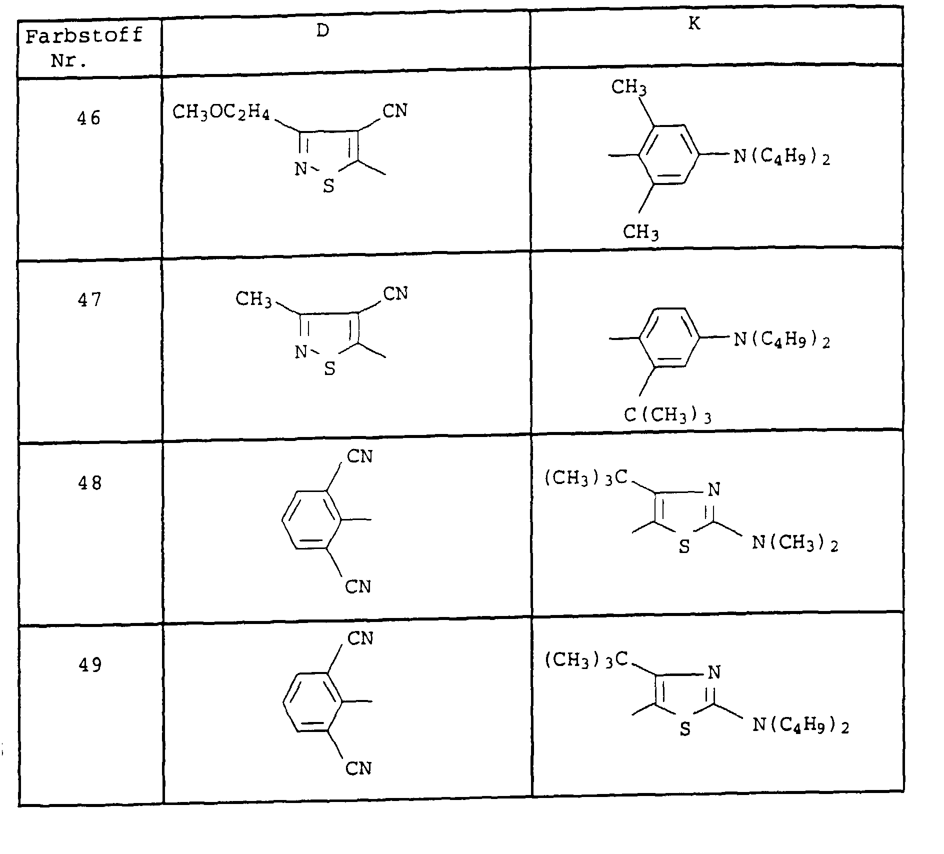

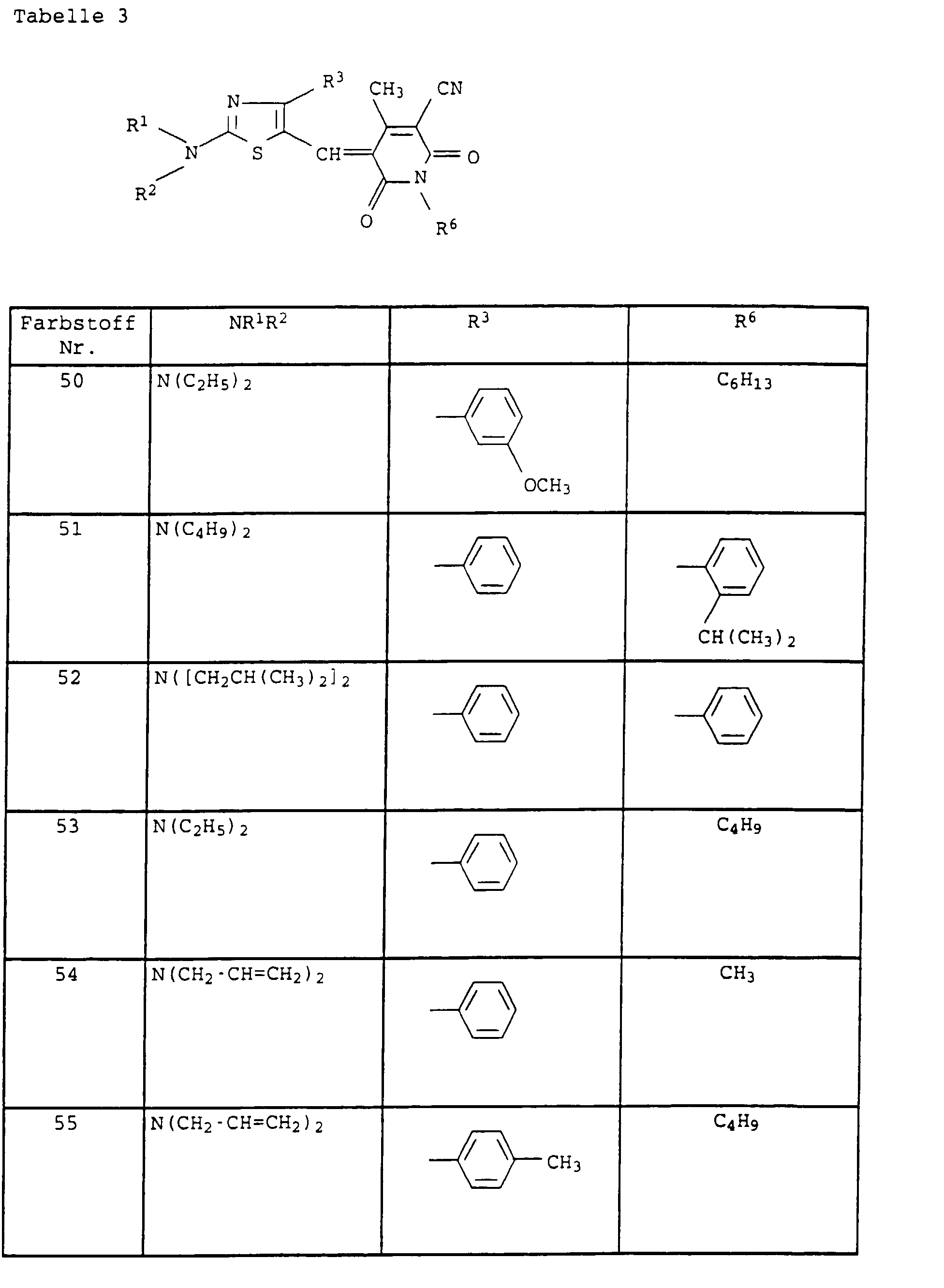

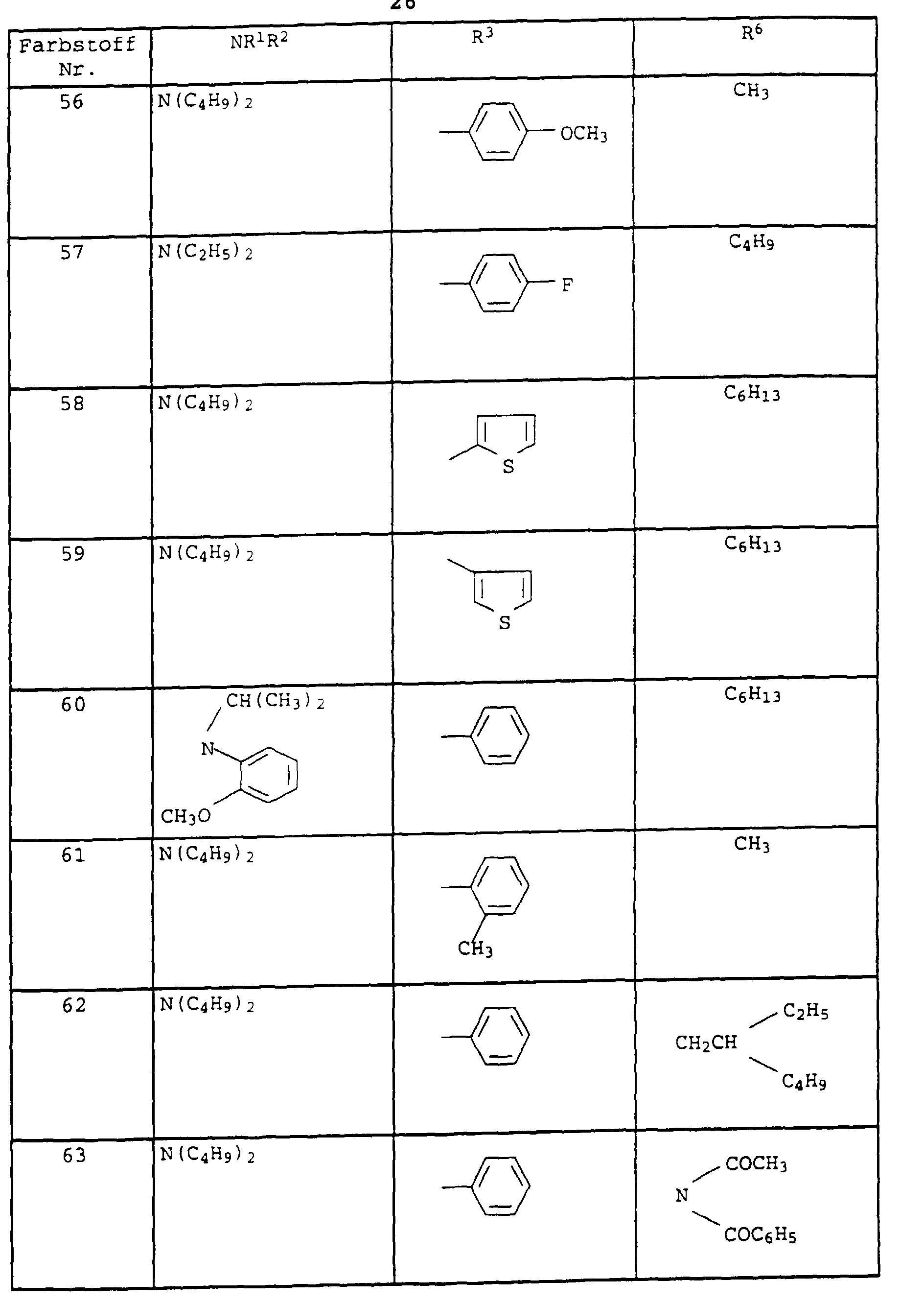

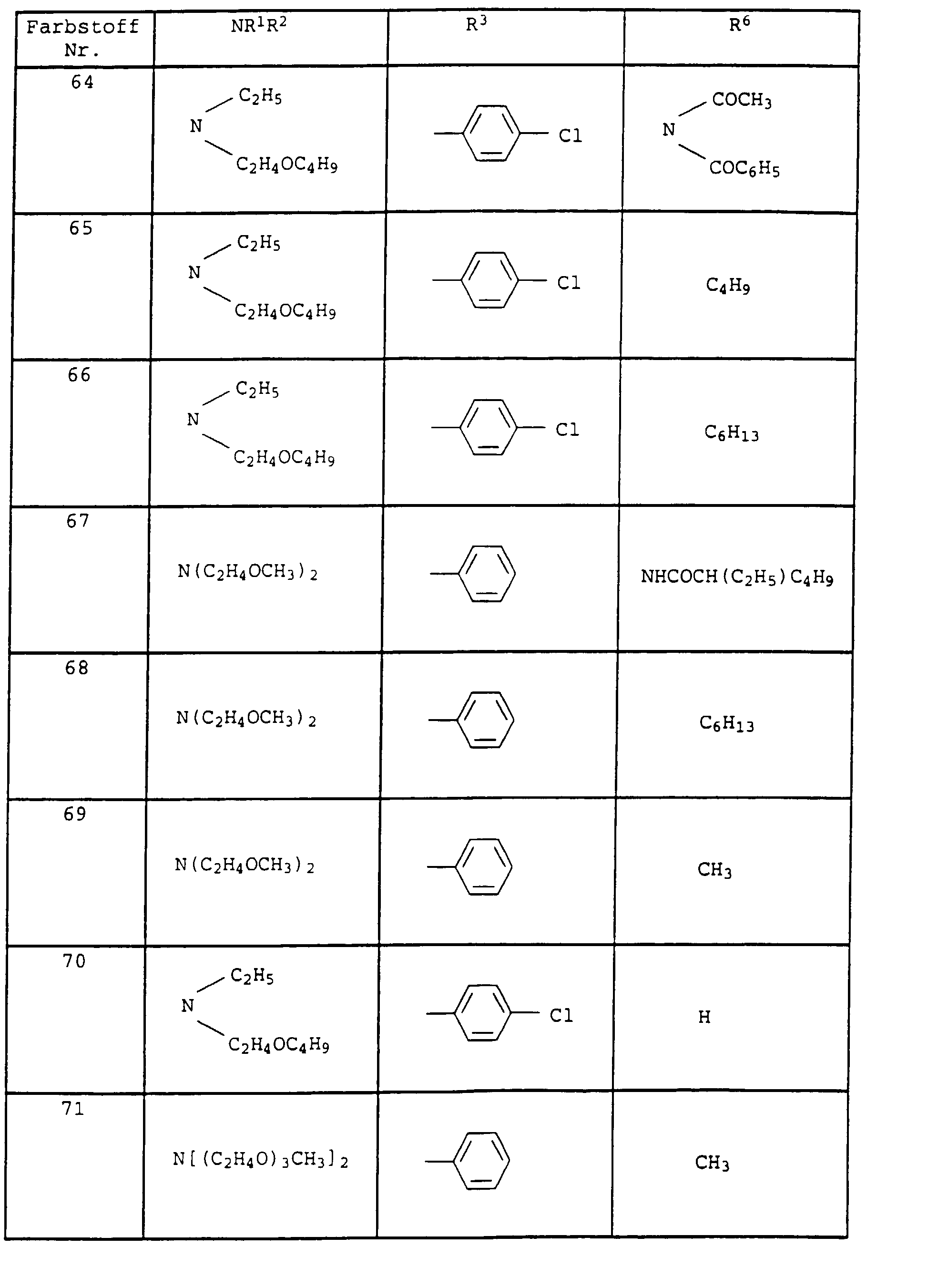

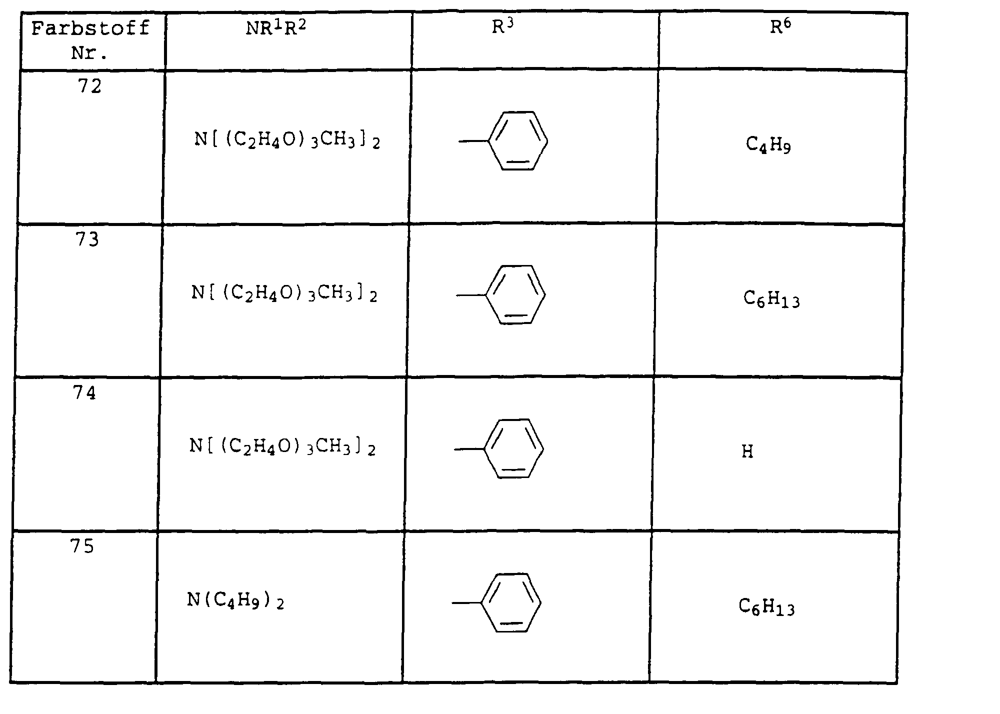

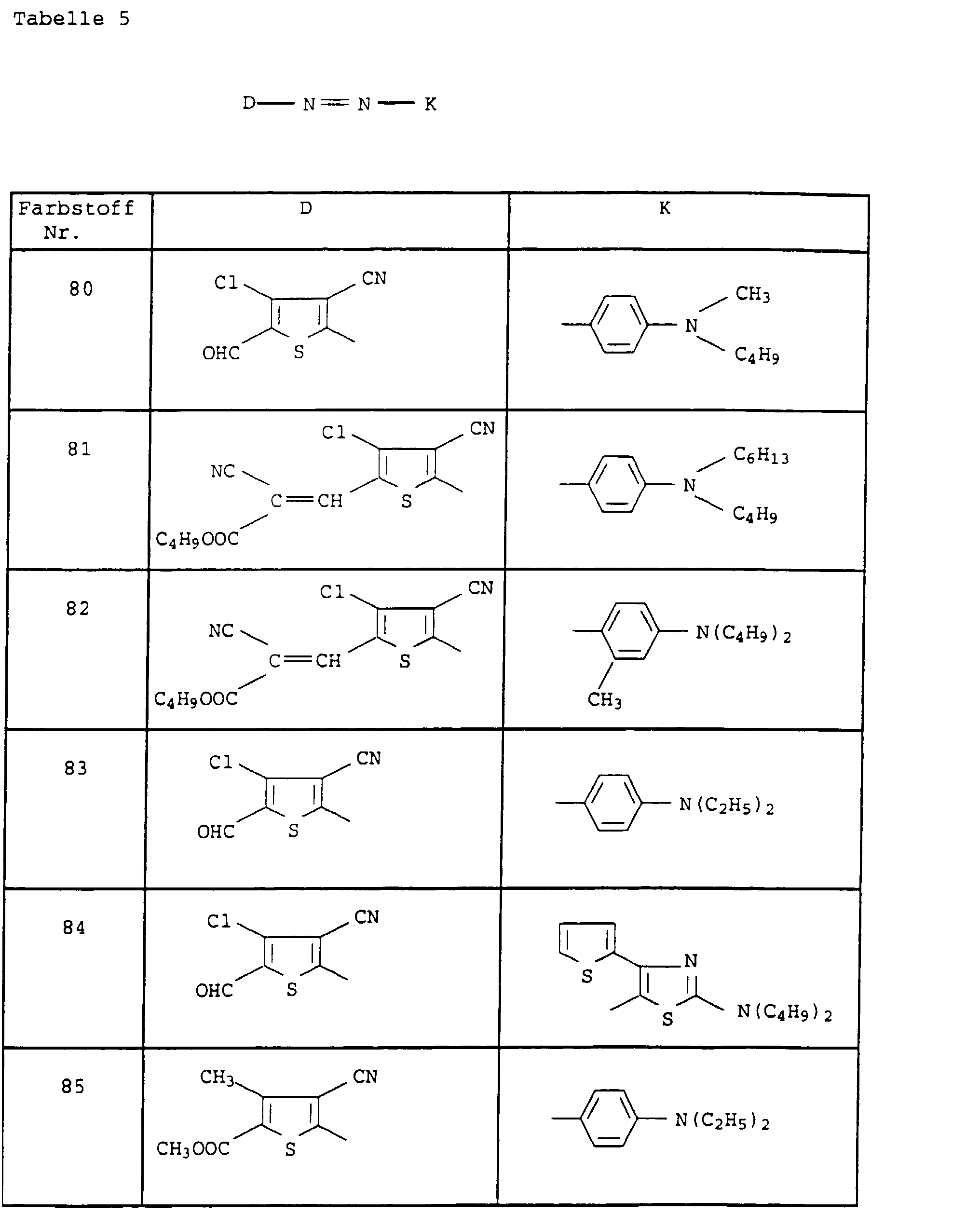

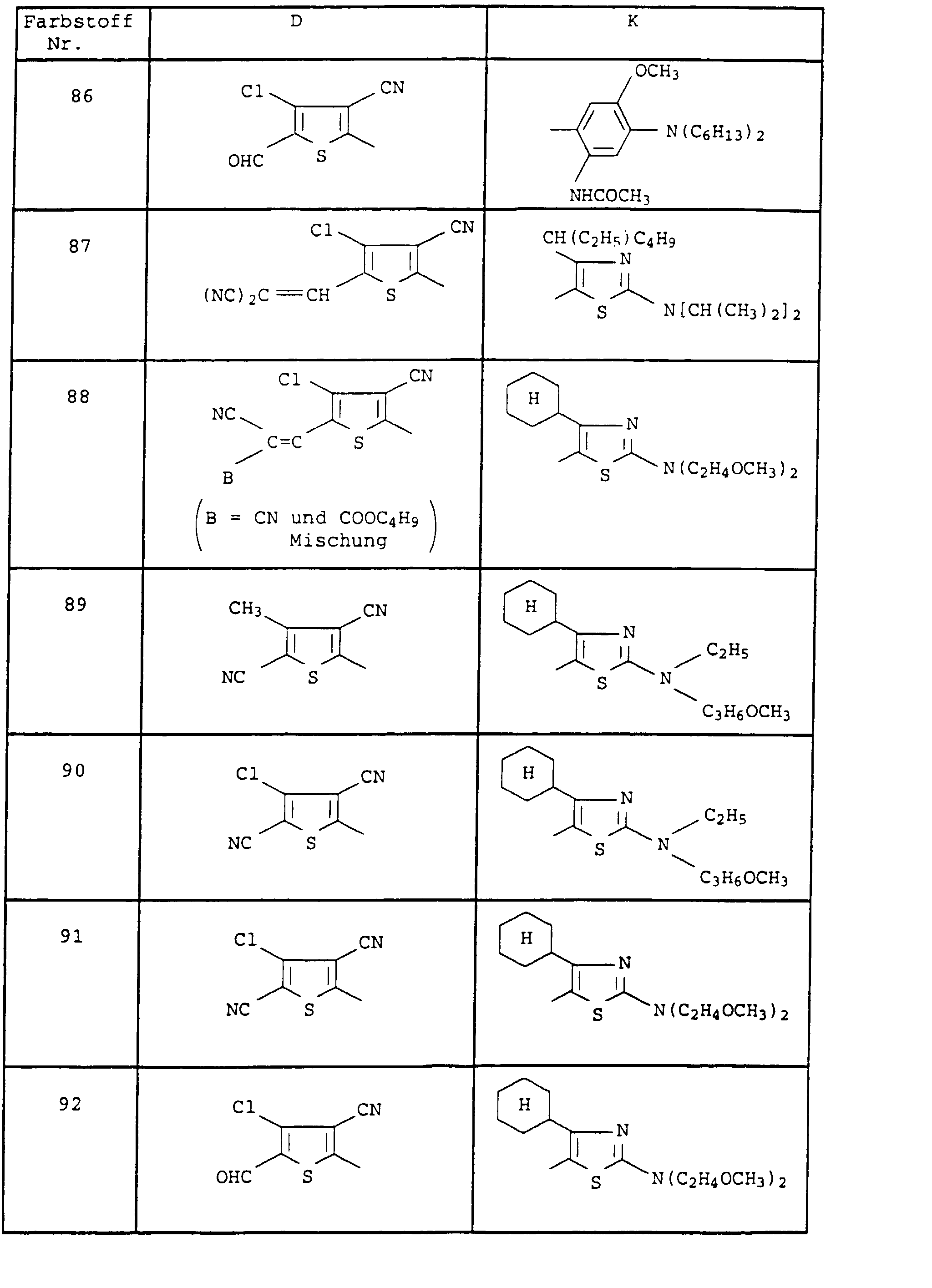

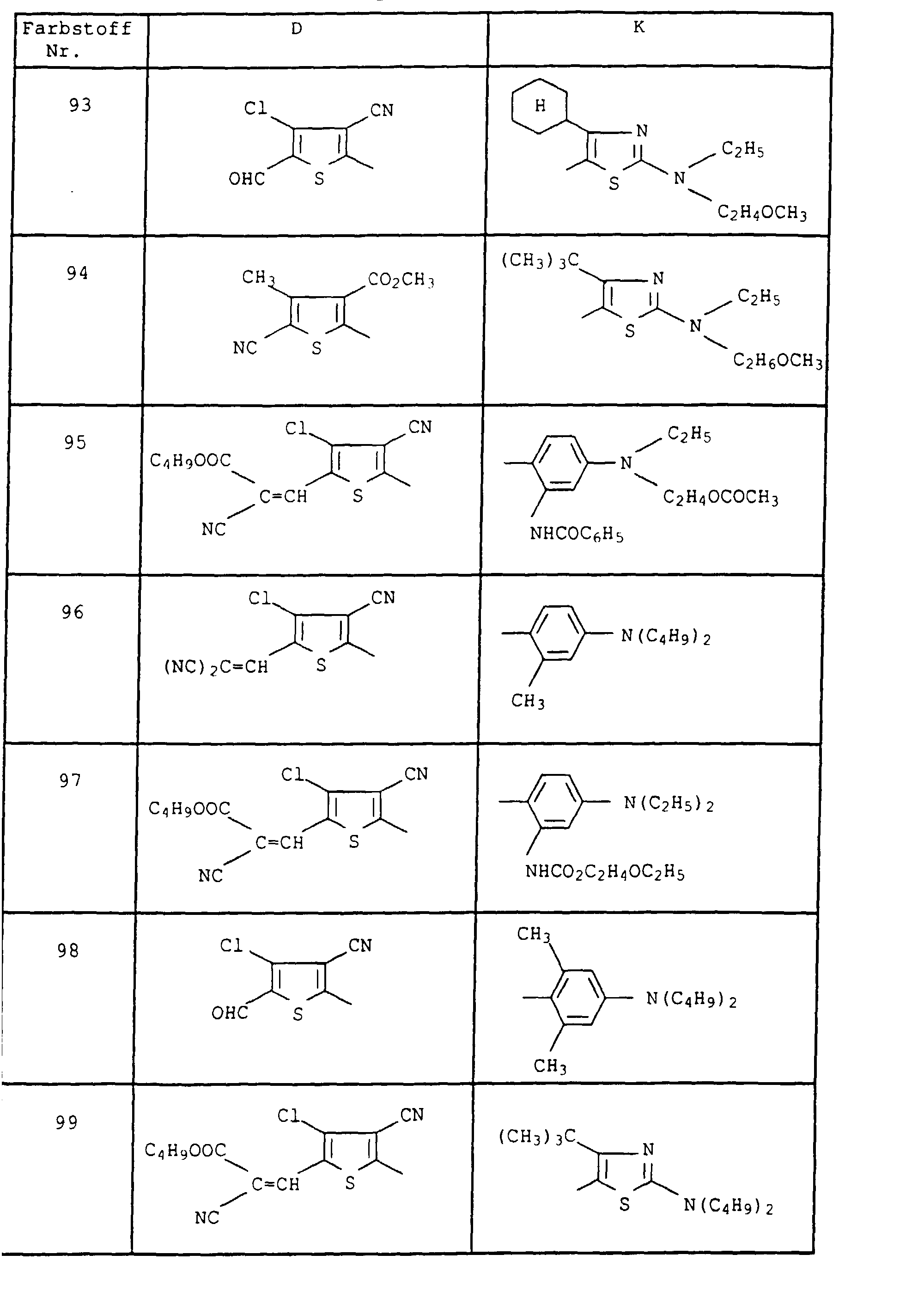

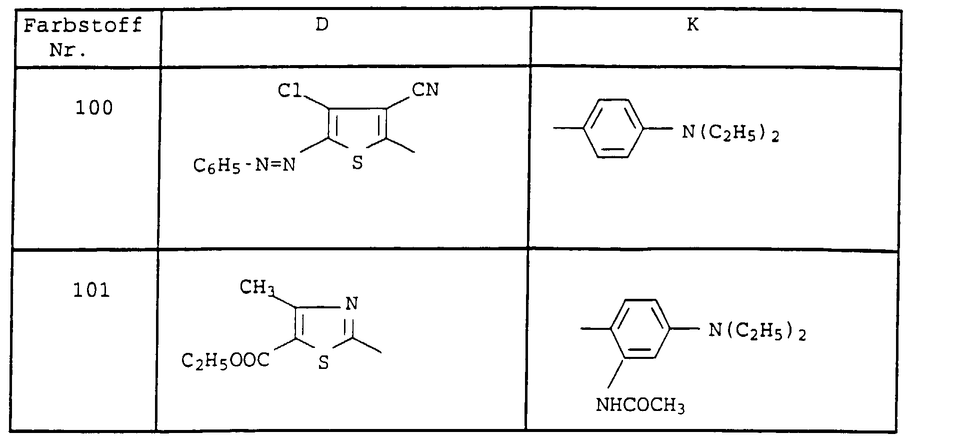

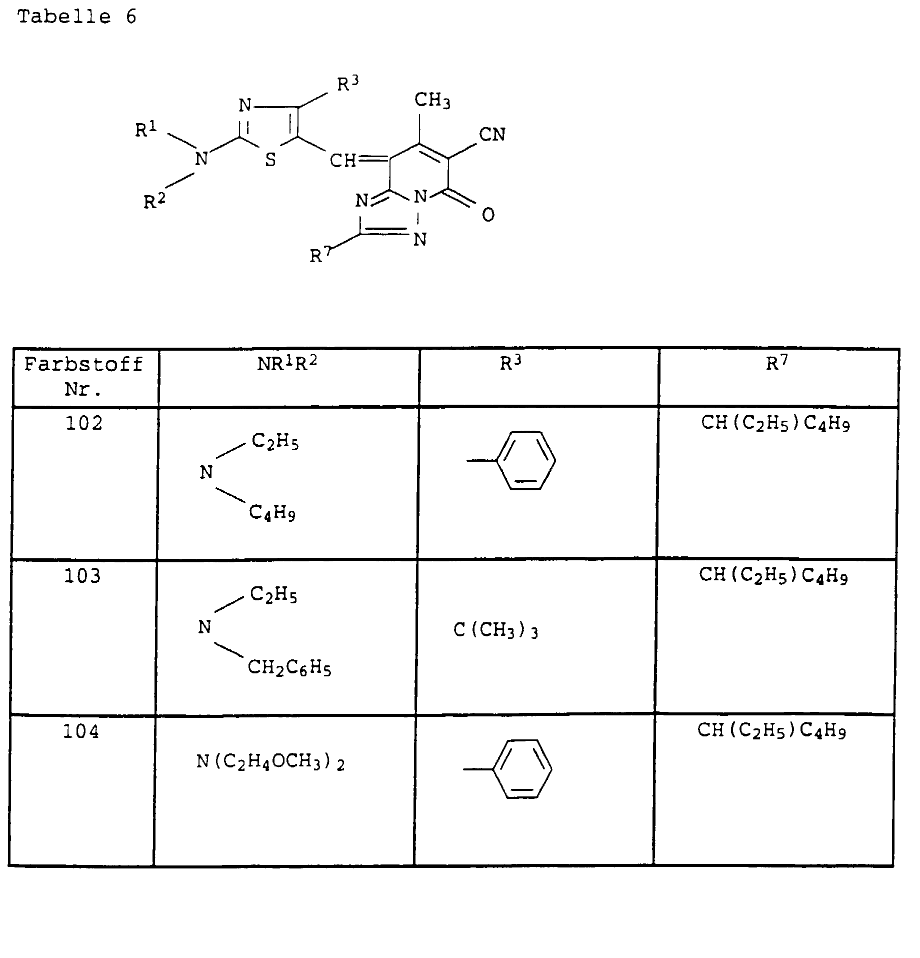

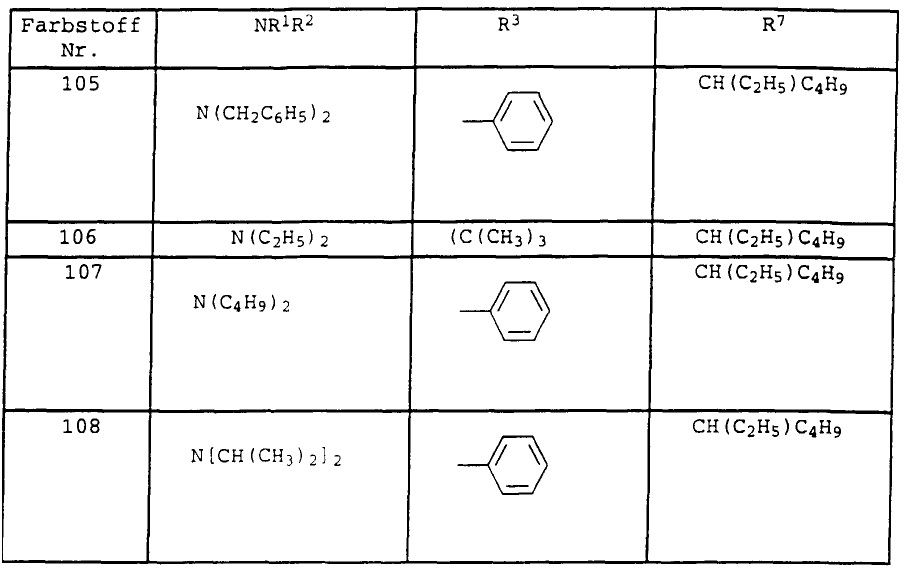

Vorschrift für die thermische Übertragung:
a) 10 g Farbstoffmischung werden, gegebenenfalls unter kurzzeitigem Erwärmen auf 80 bis 90°C, in 100 g einer 10 gew.-%igen Lösung eines Bindemittels auf Basis von Polyvinylbutyral in einem Methylethylketon/Toluol/Cyclohexanon-Gemisch (4,5:2:2 v/v/v) eingeführt.
   Das Gemisch wird mit einer 10 µm-Rakel auf eine Polyester) folie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsübliches Videoprinterpapier (Color Videoprint Paper der Firma Hitachi) verdruckt.
   Durch Veränderung der Spannung wird die Energieabgabe des Thermokopfs gesteuert, wobei die eingestellte Impulsdauer 7 ms beträgt und immer nur ein Impuls abgegeben wird. Die abgegebene Energie liegt zwischen 0,5 und 2,0 mJ/Dot.
   Da die Höhe der Anfärbung direkt proportional der zugeführten Energie ist, kann ein Farbkeil erzeugt und spektroskopisch ausgewertet werden.
   Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.

Die erhaltenen Ergebnisse sind zusammen mit dem λₘₐₓ-Werten (gemessen auf dem Videoprintpapier) in der folgenden Tabelle 7 aufgeführt.

Außerdem sind in Tabelle 7 die Lichtechtheitswerte (LE) für einige Farbstoffmischungen aufgeführt. Als wert für die Beurteilung der Lichtechtheit ist die Anzahl der Bestrahlungsstunden angegeben, nach der 20 % der ursprünglich vorhandenen Farbstoffmenge zerstört war.

**Tabelle 7**

| Mischung der Farbstoffe | Gewichtsverhältnis | λₘₐₓ [nm] | LE [h] | Q* [mJ/Dot] | m* [1/mJ] |
|---|---|---|---|---|---|
| 1/30 | 1:1 | | | 0,74 | 3,58 |
| 1/15 | 1:1 | 537 | 18 | 0,74 | 3,98 |
| 1/14 | 1:1 | 537 | 12 | 0,75 | 4,74 |
| 1/22 | 1:1 | 535 | 27 | 0,76 | 4,01 |
| 1/17 | 1:1 | 537 | 23 | 0,78 | 3,62 |
| 1/24 | 1:1 | 537 | 22 | 0,78 | 3,77 |
| 1/28 | 1:1 | 537 | 20 | 0,78 | 3,17 |
| 1/20 | 1:1 | 537 | 12 | 0,79 | 4,23 |
| 1/21 | 1:1 | 537 | 15 | 0,79 | 3,55 |
| 1/13 | 1:1 | 537 | 18 | 0,80 | 3,35 |
| 1/25 | 1:1 | 537 | 16 | 0,80 | 3,18 |
| 1/16 | 1:1 | 535 | 15 | 0,81 | 3,44 |
| 1/18 | 1:1 | 534 | 21 | 0,81 | 2,97 |
| 1/19 | 1:1 | 537 | 23 | 0,81 | 3,57 |
| 1/23 | 1:1 | 537 | 36 | 0,81 | 2,76 |
| 1/26 | 1:1 | 536 | | 0,83 | 3,70 |
| 1/47 | 1:1 | 537 | 20 | 0,78 | 3,17 |
| 1/48 | 1:1 | 534 | | 0,83 | 3,42 |
| 1/27 | 1:1 | 536 | | 0,84 | 3,37 |
| 1/101 | 1:1 | 537 | | 0,84 | 2,85 |
| 1/85 | 1:1 | 537 | | 0,88 | 2,71 |
| 1/49 | 1:1 | 534 | | 0,94 | 2,79 |
| 2/31 | 1:1 | | | 0,82 | 3,76 |
| 2/26 | 1:1 | 535 | | 0,89 | 3,01 |
| 2/49 | 1:1 | 536 | | 0,94 | 2,75 |
| 3/14 | 1:1 | 537 | 18 | 0,79 | 4,05 |
| 3/15 | 1:1 | 537 | 19 | 0,79 | 4,09 |
| 3/28 | 1:1 | 537 | 19 | 0,79 | 3,62 |
| 3/22 | 1:1 | 537 | 26 | 0,81 | 3,75 |
| 3/17 | 1:1 | 537 | 31 | 0,82 | 3,42 |
| 3/24 | 1:1 | 537 | 17 | 0,82 | 3,77 |
| 3/25 | 1:1 | 537 | 31 | 0,82 | 3,61 |
| 3/26 | 1:1 | 537 | | 0,82 | 3,39 |
| 3/13 | 1:1 | 537 | 22 | 0,83 | 3,47 |
| 3/20 | 1:1 | 537 | 16 | 0,83 | 4,06 |
| 3/21 | 1:1 | 537 | 16 | 0,83 | 3,31 |
| 3/16 | 1:1 | 537 | 24 | 0,85 | 3,21 |
| 3/18 | 1:1 | 534 | 24 | 0,85 | 3,18 |
| 3/49 | 1:1 | 535 | | 0,86 | 2,46 |
| 3/27 | 1:1 | 537 | | 0,87 | 2,77 |
| 3/85 | 1:1 | 537 | | 0,88 | 2,76 |
| 3/19 | 1:1 | 537 | 18 | 0,88 | 2,79 |
| 3/101 | | 537 | | 0,88 | 2,80 |
| 3/23 | 1:1 | | 26 | | |
| 3/47 | 1:1 | 537 | 19 | 0,79 | 3,62 |
| 4/14 | 1:1 | 537 | 15 | 0,75 | 4,16 |
| 4/15 | 1:1 | 537 | 24 | 0,76 | 3,98 |
| 4/22 | 1:1 | 537 | 21 | 0,77 | 3,92 |
| 4/24 | 1:1 | 537 | 22 | 0,79 | 3,82 |
| 4/25 | 1:1 | 536 | 48 | 0,79 | 3,82 |
| 4/28 | 1:1 | 536 | 23 | 0,79 | 3,79 |
| 4/17 | 1:1 | 534 | 20 | 0,80 | 3,48 |
| 4/20 | 1:1 | 537 | 12 | 0,80 | 3,12 |
| 4/21 | 1:1 | 537 | 15 | 0,80 | 3,57 |
| 4/13 | 1:1 | 537 | 27 | 0,81 | 3,39 |
| 4/19 | 1:1 | 537 | 15 | 0,82 | 3,79 |
| 4/18 | 1:1 | 535 | 18 | 0,83 | 3,25 |
| 4/16 | 1:1 | 537 | 20 | 0,84 | 3,26 |
| 4/26 | 1:1 | 537 | | 0,84 | 3,00 |
| 4/23 | 1:1 | 538 | 26 | 0,86 | 2,86 |
| 4/27 | 1:1 | 537 | | 0,87 | 2,81 |
| 4/47 | 1:1 | 536 | 23 | 0,79 | 3,79 |
| 4/101 | 1:1 | 534 | | 0,88 | 2,90 |
| 4/48 | 1:1 | 537 | | 0,89 | 3,06 |
| 4/85 | 1:1 | 537 | | 0,91 | 2,60 |
| 5/14 | 1:1 | 537 | 23 | 0,75 | 4,11 |
| 5/15 | 1:1 | 538 | 23 | 0,75 | 4,23 |
| 5/29 | 1:1 | 537 | 17 | 0,77 | 3,49 |
| 5/28 | 1:1 | 539 | 31 | 0,78 | 3,01 |
| 5/20 | 1:1 | 537 | 24 | 0,79 | 3,77 |
| 5/22 | 1:1 | 537 | 32 | 0,79 | 4,02 |
| 5/17 | 1:1 | 539 | 39 | 0,81 | 3,31 |
| 5/21 | 1:1 | 537 | 22 | 0,81 | 3,31 |
| 5/24 | 1:1 | 538 | 19 | 0,81 | 3,56 |
| 5/16 | 1:1 | 537 | 30 | 0,82 | 3,27 |
| 5/25 | 1:1 | 537 | 26 | 0,82 | 3,27 |
| 5/13 | 1:1 | 538 | 24 | 0,83 | 3,61 |
| 5/18 | 1:1 | 537 | 37 | 0,84 | 3,31 |
| 5/27 | 1:1 | 537 | | 0,84 | 2,99 |
| 5/48 | 1:1 | 537 | | 0,84 | 3,46 |
| 5/19 | 1:1 | 537 | 33 | 0,85 | 3,02 |
| 5/26 | 1:1 | 538 | | 0,85 | 3,02 |
| 5/45 | 1:1 | | | 0,79 | 3,96 |
| 5/47 | 1:1 | 536 | 23 | 0,79 | 3,79 |
| 5/101 | 1:1 | 538 | | 0,88 | 2,80 |
| 5/49 | 1:1 | 537 | | 0,89 | 2,77 |
| 5/23 | 1:1 | 539 | 33 | 0,92 | 2,57 |
| 5/85 | 1:1 | 539 | | 0,94 | 2,43 |
| 6/14 | 1:1 | 537 | 26 | 0,74 | 4,80 |
| 6/15 | 1:1 | 537 | 31 | 0,75 | 4,44 |
| 6/13 | 1:1 | 538 | 19 | 0,80 | 3,95 |
| 6/49 | 1:1 | 537 | | 0,81 | 2,80 |
| 6/26 | 1:1 | 539 | | 0,83 | 3,25 |
| 6/23 | 1:1 | 539 | 35 | 0,87 | 2,88 |
| 6/101 | 1:1 | 538 | | 0,88 | 2,67 |
| 6/27 | 1:1 | 537 | | 0,91 | 2,49 |
| 6/85 | 1:1 | 537 | | 0,94 | 2,30 |
| 7/29 | 1:1 | 536 | 13 | 0,78 | 3,38 |
| 7/14 | 1:1 | 534 | 20 | 0,78 | 4,12 |
| 7/15 | 1:1 | 534 | 24 | 0,79 | 3,69 |
| 7/23 | 1:1 | 534 | 30 | 0,80 | 3,34 |
| 7/22 | 1:1 | 534 | 23 | 0,81 | 3,64 |
| 7/26 | 1:1 | 533 | | 0,81 | 3,35 |
| 7/28 | 1:1 | 535 | 24 | 0,81 | 3,52 |
| 7/20 | 1:1 | 536 | 16 | 0,82 | 3,33 |
| 7/24 | 1:1 | 534 | 30 | 0,82 | 2,87 |
| 7/47 | 1:1 | 535 | 24 | 0,81 | 3,52 |
| 7/25 | 1:1 | 533 | 25 | 0,82 | 3,45 |
| 7/48 | 1:1 | 533 | | 0,82 | 3,25 |
| 7/17 | 1:1 | 533 | 30 | 0,83 | 2,85 |
| 7/21 | 1:1 | 534 | 16 | 0,83 | 3,21 |
| 7/13 | 1:1 | 535 | 32 | 0,84 | 3,12 |
| 7/27 | 1:1 | 534 | | 0,84 | 3,22 |
| 7/49 | 1:1 | 533 | | 0,84 | 3,11 |
| 7/16 | 1:1 | 533 | 24 | 0,85 | 3,05 |
| 7/101 | 1:1 | 534 | | 0,85 | 2,99 |
| 7/18 | 1:1 | 533 | 26 | 0,86 | 3,04 |
| 7/19 | 1:1 | 533 | 26 | 0,88 | 2,75 |
| 7/85 | 1:1 | 534 | | 0,92 | 2,49 |
| 8/30 | 1:1 | | | 0,73 | 3,37 |
| 8/26 | 1:1 | 532 | 31 | 0,85 | 3,54 |
| 8/27 | 1:1 | 534 | 44 | 0,88 | 3,13 |
| 9/30 | 1:1 | | | 0,75 | 3,38 |
| 9/26 | 1:1 | 536 | 34 | 0,80 | 3,79 |
| 9/27 | 1:1 | 532 | 44 | 0,81 | 4,16 |
| 10/24 | 1:1 | | 34 | 0,86 | 3,23 |
| 11/24 | 1:1 | | 22 | 0,82 | 3,22 |
| 11/46 | 1:1 | | 53 | 0,84 | 3,20 |
| 12/28 | 1:1 | | | 0,79 | 3,88 |
| 12/45 | 1:1 | | | 0,80 | 3,50 |
| 50/26 | 1:1 | | | 0,88 | 2,48 |
| 51/26 | 1:1 | | | 0,90 | 2,49 |
| 52/26 | 1:1 | | | 0,87 | 2,75 |
| 53/26 | 1:1 | | | 0,88 | 2,83 |
| 54/26 | 1:1 | | | 0,87 | 2,83 |
| 55/26 | 1:1 | | | 0,89 | 2,80 |
| 56/26 | 1:1 | | | 0,87 | 2,69 |
| 57/26 | 1:1 | | | 0,87 | 2,58 |
| 58/26 | 1:1 | | | 0,89 | 2,40 |
| 59/26 | 1:1 | | | 0,93 | 2,26 |
| 60/26 | 1:1 | | | 0,93 | 2,34 |
| 61/26 | 1:1 | | | 0,84 | 2,86 |
| 62/26 | 1:1 | | | 0,81 | 2,81 |
| 63/26 | 1:1 | 541 | | 0,86 | 2,62 |
| 68/42 | 1:1 | | | 0,89 | 2,64 |
| 70/42 | 1:1 | | | 1,06 | 2,01 |
| 70/89 | 1:1 | | | 1,25 | 1,48 |
| 72/37 | 1:1 | | | 0,97 | 2,11 |
| 72/94 | 1:1 | | | 0,97 | 2,16 |
| 73/34 | 1:1 | | | 1,04 | 1,79 |
| 75/24 | 1:1 | | 17 | 0,90 | 2,76 |
| 79/41 | 1:1 | | | 0,96 | 2,08 |
| 79/92 | 1:1 | | | 1,08 | 1,67 |
| 102/23 | 1:1 | | 24 | 0,92 | 2,58 |
| 102/45 | 1:1 | | | 0,87 | 2,73 |
| 103/24 | 1:1 | | 24 | 0,84 | 3,28 |
| 103/28 | 1:1 | | 20 | 0,82 | 3,44 |
| 104/40 | 1:1 | 558 | 14 | 0,96 | 2,31 |
| 104/92 | 1:1 | 565 | | 1,00 | 2,05 |
| 105/23 | 1:1 | | 25 | 0,95 | 2,48 |
| 106/24 | 1:1 | | 19 | 0,82 | 3,45 |
| 107/82 | 1:1 | 634 | 16 | 0,88 | 2,15 |
| 107/87 | 1:1 | | | 1,11 | 1,29 |
| 107/95 | 1:1 | | | 1,11 | 1,61 |
| 107/96 | 1:1 | | | 1,00 | 1,83 |
| 107/97 | 1:1 | | | 1,09 | 1,67 |
| 107/98 | 1:1 | | | 1,04 | 1,81 |
| 107/99 | 1:1 | | | 1,08 | 1,58 |
| 107/100 | 1:1 | | | 1,08 | 1,77 |
| 108/82 | 1:1 | 621 | | 0,88 | 2,76 |
| 108/98 | 1:1 | 623 | | 1,00 | 2,30 |

Die neuen Farbstoffmischungen weisen unerwartet hohe Werte für die Lichtechtheit auf. Teilweise ist die Lichtechtheit für die Mischungen sogar höher als die der jeweiligen Einzelfarbstoffe. Dies ist beispielhaft in der folgenden Tabelle 4 gezeigt.

**Tabelle 4**

| Farbstoff Nr. | | LE [h] | |
|---|---|---|---|
| 3 | 25 | 28 | 22 |
| Mischung im Gew.verh. 1:1 | | 31 | |
| 4 | 25 | 27 | 22 |
| Mischung im Gew.verh. 1:1 | | 48 | |
| 7 | 24 | 11 | 18 |
| Mischung im Gew.verh. 1:1 | | 30 | |

## Patentansprüche

1. Farbstoffmischungen, enthaltend einen oder mehrere Pyridonfarbstoffe der Formel I 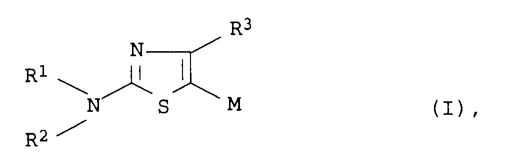 in der
R¹ und R² unabhängig voneinander jeweils für C₁-C₁₀-Alkyl, das gegebenenfalls durch C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder R¹ und R² zusammen mit dem sie verbindenden Stickstoffatom einen 5- oder 6-gliedrigen gesättigten heterocyclischen Rest, der weitere Heteroatome aufweisen kann,
R³ für C₃-C₁₀-Alkyl, C₅-C₇-cycloalkyl, gegebenenfalls durch C₁-C₄-Alkyl, C₁-C₄-Alkoxy, Halogen oder Nitro substituiertes Phenyl oder Thienyl und
M für einen Rest der Formel 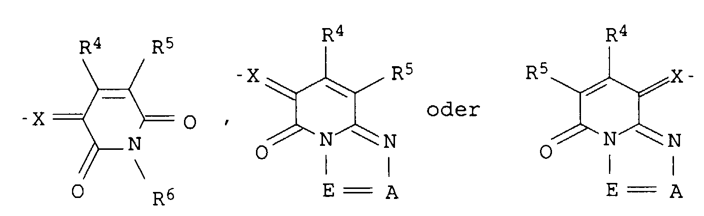 stehen,
worin
X CH,
R⁴ Wasserstoff, C₁-C₆-Alkyl oder gegebenenfalls durch C₁-C₄-Alkyl, C₁-C₄-Alkoxy, Halogen oder Nitro substituiertes Phenyl,
R⁵ Cyano, Carbamoyl, C₁-C₈-Mono- oder Dialkylcarbamoyl, Carboxyl, C₁-C₈-Alkoxycarbonyl oder Benzimidazolyl,
R⁶ Wasserstoff, C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-cycloalkyl, gegebenenfalls durch C₁-C₄-Alkyl, C₁-C₄-Alkoxy, Halogen oder Nitro substituiertes Phenyl, oder einen Rest der Formel NB¹B², worin B¹ und B² unabhängig voneinander jeweils die Bedeutung von Wasserstoff, C₁-C₁₀-Alkyl, gegebenenfalls durch C₁-C₄-Alkyl, C₁-C₄-Alkoxy, Halogen oder Nitro substituiertem Phenyl, C₁-C₉-Alkanoyl, C₁-C₈-Alkylsulfonyl, gegebenenfalls durch C₁-C₄-Alkyl, C₁-C₄-Alkoxy, Halogen oder Nitro substituiertem Phenylsulfonyl, Pyridylsulfonyl, gegebenenfalls durch C₁-C₄-Alkyl, C₁-C₄-Alkoxy, Halogen oder Nitro substituiertem Benzoyl, Pyridylcarbonyl oder Thienylcarbonyl besitzen, und
einer der beiden Reste A und E Stickstoff und der andere einen Rest der Formel C-R⁷, worin R⁷ die Bedeutung von C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy, Halogen oder Nitro substituiertem Phenyl besitzt, bedeuten,stehen, bedeuten,
sowie einen oder mehrere Azofarbstoffe der Formel II
D - N = N - K (II),
in der
D für einen Rest der Formel 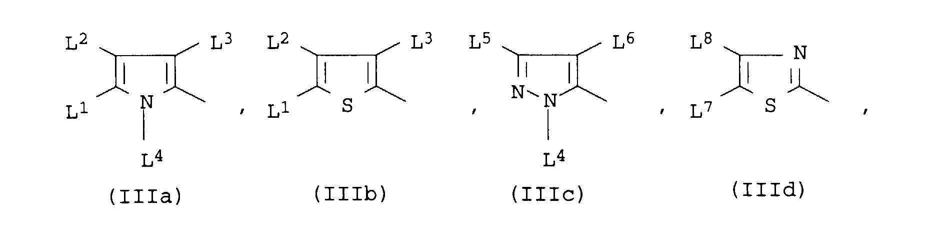 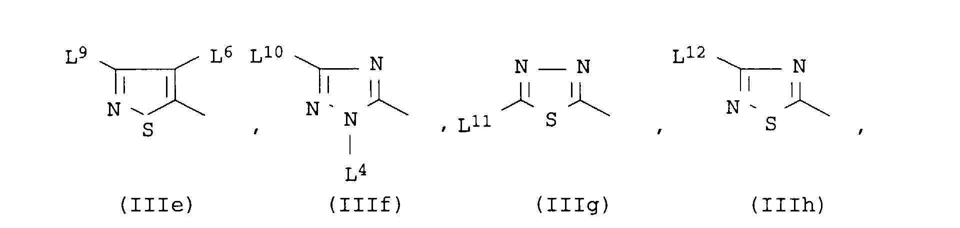 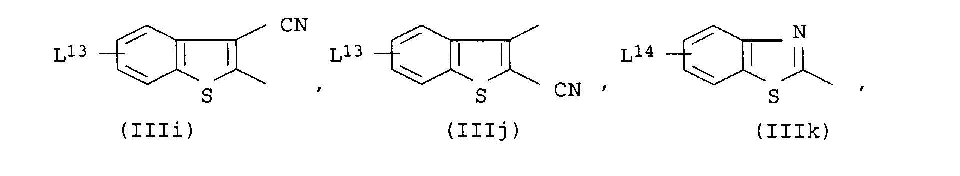 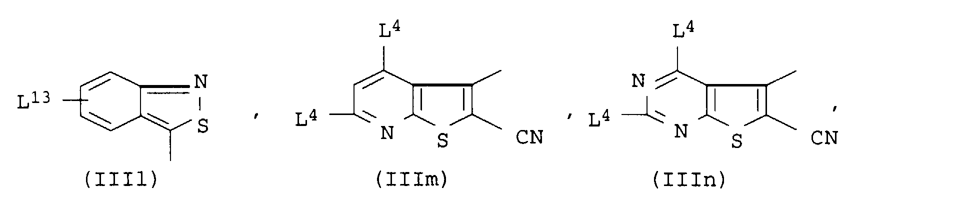 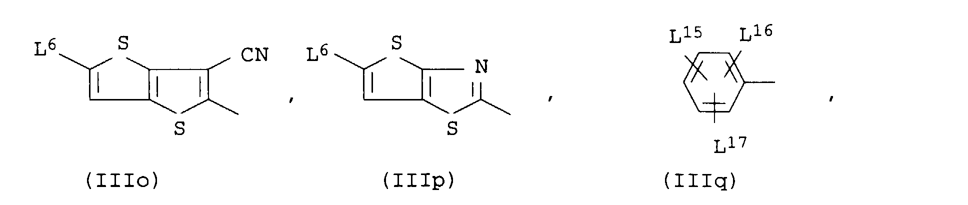 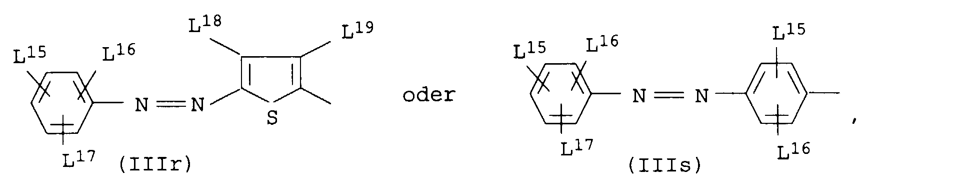
worin
L¹ Nitro, Cyano, C₁-C₆-Alkanoyl, Benzoyl, C₁-C₈-Alkoxycarbonyl, C₁-C₈-Alkylsulfonyl, gegebenenfalls durch C₁-C₄-Alkyl, C₁-C₄-Alkoxy, Halogen oder Nitro substituiertes Phenylsulfonyl oder einen Rest der Formel -CH=T, worin T die Bedeutung von Hydroxyimino, C₁-C₄-Alkoxyimino oder eines Restes einer CH-aciden Verbindung H₂T besitzt,
L² Wasserstoff, C₁-C₆-Alkyl gegebenenfalls durch C₁-C₄-Alkyl, C₁-C₄-Alkoxy, Halogen oder Nitro substituiertes Phenyl, Halogen, Hydroxy, Mercapto, gegebenenfalls durch Phenyl oder C₁-C₄-Alkoxy substituiertes C₁-C₆-Alkoxy, gegebenenfalls durch C₁-C₄-Alkyl, C₁-C₄-Alkoxy, Halogen oder Nitro substituiertes Phenoxy, gegebenenfalls durch Phenyl substituiertes C₁-C₈-Alkylthio, gegebenenfalls durch C₁-C₄-Alkyl, C₁-C₄-Alkoxy, Halogen oder Nitro substituiertes Phenylthio, C₁-C₈-Alkylsulfonyl oder gegebenenfalls durch C₁-C₄-Alkyl, C₁-C₄-Alkoxy, Halogen oder Nitro substituiertes Phenylsulfonyl,
L³ Cyano, C₁-C₈-Alkoxycarbonyl oder Nitro,
L⁴ Wasserstoff, C₁-C₆-Alkyl, Phenyl oder Tolyl,
L⁵ C₁-C₆-Alkyl, Phenyl oder Tolyl,
L⁶ Wasserstoff, Cyano, C₁-C₈-Alkoxycarbonyl, C₁-C₆-Alkanoyl, Thiocyanato, Halogen oder Nitro,
L⁷ Nitro, Cyano, C₁-C₆-Alkanoyl, Benzoyl, C₁-C₈-Alkoxycarbonyl, C₁-C₈-Alkylsulfonyl, gegebenenfalls durch C₁-C₄-Alkyl, C₁-C₄-Alkoxy, Halogen oder Nitro substituiertes Phenylsulfonyl oder einen Rest der Formel -CH=T, worin T die obengenannte Bedeutung besitzt,
L⁸ Wasserstoff, C₁-C₆-Alkyl, gegebenenfalls durch C₁-C₄-Alkyl, C₁-C₄-Alkoxy, Halogen oder Nitro substituiertes Phenyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₈-Alkylthio, gegebenenfalls durch C₁-C₄-Alkyl, C₁-C₄-Alkoxy, Halogen oder Nitro substituiertes Phenylthio, C₁-C₈-Alkylsulfonyl, gegebenenfalls durch C₁-C₄-Alkyl, C₁-C₄-Alkoxy, Halogen oder Nitro substituiertes Phenylsulfonyl oder C₁-C₈-Alkoxycarbonyl,
L⁹ Cyano, gegebenenfalls durch Phenyl substituiertes C₁-C₆-Alkyl, gegebenenfalls durch Phenyl substituiertes C₁-C₈-Alkoxy, gegebenenfalls durch Phenyl substituiertes C₁-C₈-Alkylthio, gegebenenfalls durch C₁-C₄-Alkyl, C₁-C₄-Alkoxy, Halogen oder Nitro substituiertes Phenyl, Thienyl, C₁-C₄-Alkylthienyl, Pyridyl oder C₁-C₄-Alkylpyridyl,
L¹⁰ Phenyl, Tolyl oder Pyridyl,
L¹¹ Trifluormethyl, Nitro, C₁-C₆-Alkyl, Phenyl, gegebenenfalls durch Phenyl substituiertes C₁-C₈-Alkylthio oder C₁-C₆-Dialkylamino,
L¹² C₁-C₆-Alkyl, Phenyl, gegebenenfalls durch Phenyl substituiertes C₁-C₈-Alkylthio, 2-Cyanoethylthio oder 2-(C₁-C₆-Alkoxycarbonyl)ethylthio,
L¹³ Wasserstoff, Nitro oder Halogen,
L¹⁴ Wasserstoff, Cyano, C₁-C₈-Alkoxycarbonyl, Nitro oder Halogen,
L¹⁵, L¹⁶ und L¹⁷ unabhängig voneinander jeweils Wasserstoff, C₁-C₆-Alkyl, C₁-C₆-Alkoxy, Halogen, Nitro, Cyano, gegebenenfalls durch Phenoxy substituiertes C₁-C₈-Alkoxycarbonyl, C₁-C₈-Alkylsulfonyl oder gegebenenfalls durch C₁-C₄-Alkyl, C₁-C₄-Alkoxy, Halogen oder Nitro substituiertes Phenylsulfonyl oder L¹⁵ und L¹⁶ zusammen einen Rest der Formel CO-NW-CO, worin W die Bedeutung von C₁-C₁₀-A1kyl, besitzt, das durch 1 bis 4 oder 2 Sauerstoffatome in Etherfunktion unterbrochen sein kann und gegebenenfalls durch Hydroxy substituiert ist,
L¹⁸ Wasserstoff, Methyl oder Chlor, und
L¹⁹ Cyano oder C₁-C₈-Alkoxycarbonyl bedeuten, und
K für einen Rest der Formel 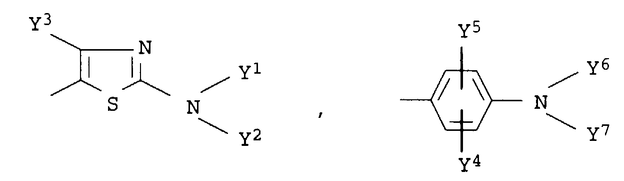 oder 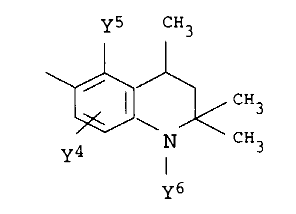 stehen,
worin
Y¹ und Y² unabhängig voneinander jeweils C₁-C₁₀-Alkyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-cycloalkyl, C₃-C₄-Alkenyl, gegebenenfalls durch C₁-C₄-Alkyl, C₁-C₄-Alkoxy, Halogen oder Nitro substituiertes Phenyl oder Y¹ und Y² zusammen mit dem sie verbindenden Stickstoffatom einen 5- oder 6-gliedrigen gesättigten heterocyclischen Rest, der weitere Heteroatome aufweisen kann,
Y³ C₃-C₁₀-Alkyl, C₅-C₇-Cycloalkyl, gegebenenfalls durch C₁-C₄-Alkyl, C₁-C₄-Alkoxy, Halogen oder Nitro substituiertes Phenyl oder Thienyl,
Y⁴ Wasserstoff, C₁-C₁₀-Alkyl, das gegebenenfalls durch 1 bis 4 Sauerstoffatome in Etherfunktion unterbrochen ist, Hydroxy, C₁-C₆-Alkoxy, C₁-C₄-Alkylsulfonylamino, C₁-C₈-Mono- oder Dialkylaminosulfonylamino oder den Rest -NHCOY⁸ oder -NHCO₂Y⁸, wobei Y⁸ die Bedeutung von Phenyl, Benzyl, Tolyl oder C₁-C₁₀-Alkyl, das gegebenenfalls durch 1 bis 4 Sauerstoffatome in Etherfunktion unterbrochen ist, besitzt,
Y⁵ Wasserstoff, C₁-C₆-Alkyl oder C₁-C₆-Alkoxy und
Y⁶ und Y⁷ unabhängig voneinander jeweils Wasserstoff, C₁-C₁₀-A1kyl, das gegebenenfalls durch Cyano, Hydroxy, Halogen, C₁-C₄-Alkanoyloxy, C₁-C₄-Alkoxycarbonyl, C₁-C₄-Alkoxycarbonyloxy, deren Alkylkette jeweils durch ein Sauerstoffatom in Etherfunktion unterbrochen sein kann, oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy, Halogen oder Nitro substituiertes Phenyl oder Y¹ und Y² zusammen mit dem sie verbindenden Stickstoffatom einen 5- oder 6-gliedrigen gesättigten heterocyclischen Rest, der weitere Heteroatome aufweisen kann, bedeuten.

2. Farbstoffmischungen nach Anspruch 1, dadurch gekennzeichnet, daß R⁴ Methyl bedeutet.

3. Farbstoffmischungen nach Anspruch 1, dadurch gekennzeichnet, daß R³ C₃-C₁₀-Alkyl, Phenyl oder Thienyl bedeutet.

4. Farbstoffmischungen nach Anspruch 1, dadurch gekennzeichnet, daß R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

5. Farbstoffmischungen nach Anspruch 1, dadurch gekennzeichnet, daß R⁷ C₁-C₈-Alkyl oder gegebenenfalls durch C₁-C₄-Alkyl oder C₁-C₄-Alkoxy substituieres Phenyl bedeutet.

6. Farbstoffmischungen nach Anspruch 1, dadurch gekennzeichnet, daß D für den Rest der Formel IIIb, IIId, IIIe oder IIIq steht.

7. Farbstoffmischungen nach Anspruch 1, dadurch gekennzeichnet, daß D für einen Rest der Formel IIIb, IIId, IIIe oder IIIq steht, worin
L¹ Nitro, Cyano, C₁-C₄-Alkoxycarbonyl, Formyl oder einen Rest der Formel -CH=T, worin T die in Anspruch 1 genannte Bedeutung besitzt,
L² Wasserstoff, C₁-C₆-Alkyl oder Halogen,
L³ Cyano, C₁-C₆-Alkoxycarbonyl oder Nitro,
L⁶ Cyano oder Nitro,
L⁷ Nitro, Cyano, Formyl, C₁-C₆-Alkoxycarbonyl oder einen Rest der Formel -CH=T, worin T die in Anspruch 1 genannte besitzt,
L⁸ C₁-C₆-Alkyl, gegebenenfalls durch C₁-C₄-Alkyl, C₁-C₄-Alkoxy, Halogen oder Nitro substituiertes Phenyl, Cyano, Halogen oder C₁-C₆-Alkoxycarbonyl,
L⁹ gegebenenfalls durch Phenyl substituiertes C₁-C₆-Alkyl, gegebenenfalls durch Phenyl substituiertes C₁-C₆-Alkylthio, gegebenenfalls durch C₁-C₄-Alkyl, C₁-C₄-Alkoxy, Halogen oder Nitro substituiertes Phenyl oder Thienyl und
L¹⁵, L¹⁶, L¹⁷ unabhängig voneinander jeweils Wasserstoff, C₁-C₆-Alkyl, C₁-C₆-Alkoxy, Nitro, Cyano oder gegebenenfalls durch Phenoxy substituiertes C₁-C₆-Alkoxycarbonyl oder L¹⁵ und L¹⁶ zusammen einen Rest der Formel CO-NW-CO, worin W die in Anspruch 1 genannte Bedeutung besitzt, bedeuten.

8. Farbstoffmischungen nach Anspruch 1, dadurch gekennzeichnet, daß Y¹, Y², Y⁶ und Y⁷ unabhängig voneinander jeweils C₁-C₆-Alkyl, das gegebenenfalls durch Hydroxy, C₁-C₄-Alkanoyloxy, C₁-C₄-Alkoxycarbonyl, C₁-C₄-Alkoxycarbonyloxy oder Phenyl substituiert ist und durch 1 oder 2 Sauerstoffatome in Etherfunktion unterbrochen sein kann, bedeuten.

9. Farbstoffmischungen nach Anspruch 1, dadurch gekennzeichnet, daß Y³ verzweigtes C₃-C₁₀-Alkyl bedeutet.

10. Farbstoffmischungen nach Anspruch 1, dadurch gekennzeichnet, daß Y⁵ Wasserstoff, C₁-C₄-Alkyl, Methoxy, Ethoxy oder C₁-C₆-Alkanoylamino bedeutet.

11. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich eine Farbstoffmischung gemäß Anspruch 1 befindet.

## Claims

1. Dye mixtures including one or more pyridone dyes of the formula I 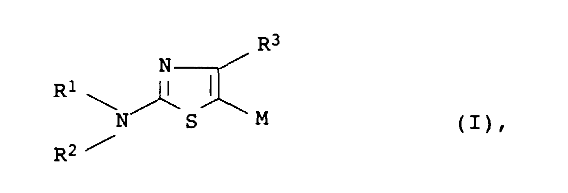 where
R¹ and R² are independently of each other C₁-C₁₀-alkyl with or without substitution by C₁-C₄-alkoxycarbonyl, C₁-C₄-alkoxycarbonyloxy, whose alkyl chain may in each case be interrupted by an oxygen atom in ether function, or phenyl and with or without interruption by from 1 to 4 oxygen atoms in ether function, C₅-C₇-cycloalkyl, C₃-C₄-alkenyl, unsubstituted or C₁-C₄-alkyl-, C₁-C₄-alkoxy-, halogen- or nitro-substituted phenyl, or R¹ and R² are together with the nitrogen atom joining them together a 5- or 6-membered saturated heterocyclic radical with or without further hetero atoms,
R³ is C₃-C₁₀-alkyl, C₅-C₇-cycloalkyl, unsubstituted or C₁-C₄-alkyl-, C₁-C₄-alkoxy-, halogen- or nitro-substituted phenyl or thienyl, and
M is a radical of the formula 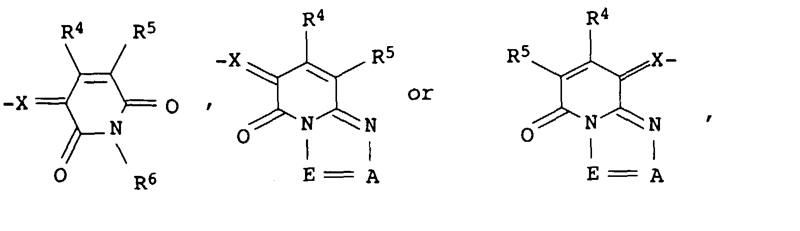
where
X is CH,
R⁴ is hydrogen, C₁-C₆-alkyl or unsubstituted or C₁-C₄-alkyl-, C₁-C₄-alkoxy-, halogen- or nitro-substituted phenyl,
R⁵ is cyano, carbamoyl, mono- or di(C₁-C₈-alkyl)carbamoyl, carboxyl, C₁-C₈-alkoxycarbonyl or benzimidazolyl,
R⁶ is hydrogen, C₁-C₁₀-alkyl with or without substitution by phenyl, phenoxy, cyclohexyloxy or pyrazolyl and with or without interruption by from 1 to 4 oxygen atoms in ether function, C₅-C₇-cycloalkyl or unsubstituted or C₁-C₄-alkyl-, C₁-C₄-alkoxy-, halogen- or nitro-substituted phenyl, or a radical of the formula NB¹B² where B¹ and B² are independently of each other hydrogen, C₁-C₁₀-alkyl, unsubstituted or C₁-C₄-alkyl-, C₁-C₄-alkoxy-, halogen- or nitro-substituted phenyl, C₁-C₉-alkanoyl, C₁-C₈-alkylsulfonyl, unsubstituted or C₁-C₄-alkyl-, C₁-C₄-alkoxy-, halogen- or nitro-substituted phenylsulfonyl, pyridylsulfonyl, unsubstituted or C₁-C₄-alkyl-, C₁-C₄-alkoxy-, halogen- or nitro-substituted benzoyl, pyridylcarbonyl or thienylcarbonyl, and
one of the two radicals A and E is nitrogen and the other is a radical of the formula C-R⁷, where R⁷ has the meaning of C₁-C₁₀-alkyl, with or without phenyl, phenoxy, cyclohexyloxy or pyrazolyl substitution and with or without interruption by from 1 to 4 oxygen atoms in ether function, of C₅-C₇-cycloalkyl or of unsubstituted or C₁-C₄-alkyl-, C₁-C₄-alkoxy-, halogen- or nitro-substituted phenyl,
and one or more azo dyes of the formula II
D - N = N - K (II),
where
D is a radical of the formula 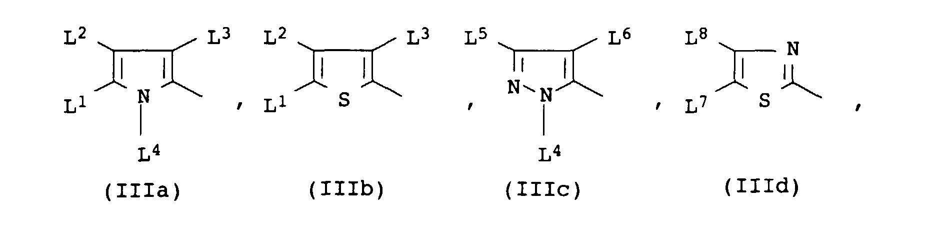 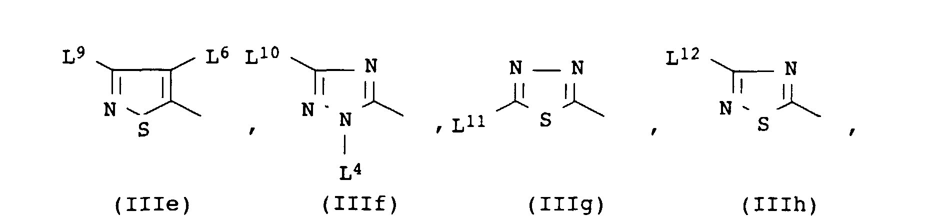 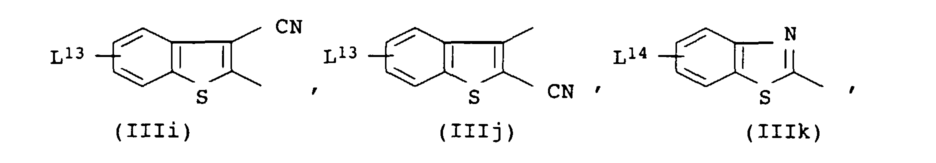 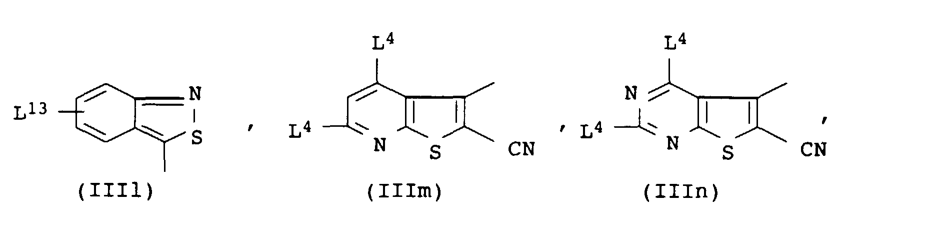 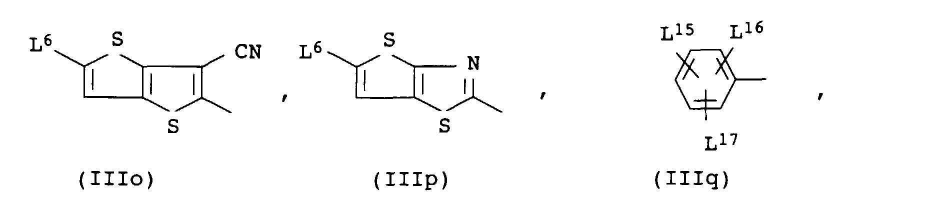 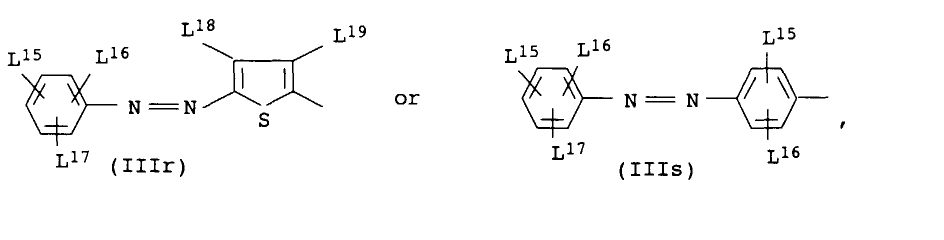
where
L¹ is nitro, cyano, C₁-C₆-alkanoyl, benzoyl, C₁-C₈-alkoxycarbonyl, C₁-C₈-alkylsulfonyl, unsubstituted or C₁-C₄-alkyl-, C₁-C₄-alkoxy-, halogen- or nitro-substituted phenylsulfonyl or a radical of the formula -CH=T, where T is hydroxyimino, C₁-C₄-alkoxyimino or a radical of an acidic-CH compound H₂T,
L² is hydrogen, C₁-C₆-alkyl, unsubstituted or C₁-C₄-alkyl-, C₁-C₄-alkoxy-, halogen- or nitro-substituted phenyl, halogen, hydroxyl, mercapto, unsubstituted or phenyl- or C₁-C₄-alkoxy-substituted C₁-C₆-alkoxy, unsubstituted or C₁-C₄-alkyl-, C₁-C₄-alkoxy-, halogen- or nitro-substituted phenoxy, unsubstituted or phenyl-substituted C₁-C₈-alkylthio, unsubstituted or C₁-C₄-alkyl-, C₁-C₄-alkoxy-, halogen- or nitro-substituted phenylthio, C₁-C₈-alkylsulfonyl or unsubstituted or C₁-C₄-alkyl-, C₁-C₄-alkoxy-, halogen- or nitro-substituted phenylsulfonyl,
L³ is cyano, C₁-C₈-alkoxycarbonyl or nitro,
L⁴ is hydrogen, C₁-C₆-alkyl, phenyl or tolyl,
L⁵ is C₁-C₆-alkyl, phenyl or tolyl,
L⁶ is hydrogen, cyano, C₁-C₈-alkoxycarbonyl, C₁-C₆-alkanoyl, thiocyanato, halogen or nitro,
L⁷ is nitro, cyano, C₁-C₆-alkanoyl, benzoyl, C₁-C₈-alkoxycarbonyl, C₁-C₈-alkylsulfonyl, unsubstituted or C₁-C₄-alkyl-, C₁-C₄-alkoxy-, halogen- or nitro-substituted phenylsulfonyl or a radical of the formula -CH=T, where T is as defined above,
L⁸ is hydrogen, C₁-C₆-alkyl, unsubstituted or C₁-C₄-alkyl-, C₁-C₄-alkoxy-, halogen- or nitro-substituted phenyl, cyano, halogen, unsubstituted or phenyl- or C₁-C₄-alkoxy- substituted C₁-C₆-alkoxy, unsubstituted or phenyl-substituted C₁-C₈-alkylthio, unsubstituted or C₁-C₄-alkyl-, C₁-C₄-alkoxy-, halogen- or nitro-substituted phenylthio, C₁-C₈-alkylsulfonyl, unsubstituted or C₁-C₄-alkyl-, C₁-C₄-alkoxy-, halogen- or nitro-substituted phenylsulfonyl or C₁-C₈-alkoxycarbonyl,
L⁹ is cyano, unsubstituted or phenyl-substituted C₁-C₆-alkyl, unsubstituted or phenyl-substituted C₁-C₈-alkoxy, unsubstituted or phenyl-substituted C₁-C₈-alkylthio, unsubstituted or C₁-C₄-alkyl-, C₁-C₄-alkoxy-, halogen- or nitro-substituted phenyl, thienyl, C₁-C₄-alkylthienyl, pyridyl or C₁-C₄-alkylpyridyl,
L¹⁰ is phenyl, tolyl or pyridyl,
L¹¹ is trifluoromethyl, nitro, C₁-C₆-alkyl, phenyl, unsubstituted or phenyl-substituted C₁-C₈-alkylthio or C₁-C₆-dialkylamino,
L¹² is C₁-C₆-alkyl, phenyl, unsubstituted or phenyl-substituted C₁-C₈-alkylthio, 2-cyanoethylthio or 2-(C₁-C₆-alkoxycarbonyl)ethylthio,
L¹³ is hydrogen, nitro or halogen,
L¹⁴ is hydrogen, cyano, C₁-C₈-alkoxycarbonyl, nitro or halogen,
L¹⁵, L¹⁶ and L¹⁷ are independently of one another hydrogen, C₁-C₆-alkyl, C₁-C₆-alkoxy, halogen, nitro, cyano, unsubstituted or phenoxy-substituted C₁-C₈-alkoxycarbonyl, C₁-C₈-alkylsulfonyl or unsubstituted or C₁-C₄-alkyl-, C₁-C₄-alkoxy-, halogen- or nitro-substituted phenylsulfonyl, or L¹⁵ and L¹⁶ are together a radical of the formula CO-NW-CO, where W is C₁-C₁₀-alkyl with or without interruption by from 1 to 4 or 2 oxygen atoms in ether function and with or without substitution by hydroxyl,
L¹⁸ is hydrogen, methyl or chlorine, and
L¹⁹ is cyano or C₁-C₈-alkoxycarbonyl, and
K is a radical of the formula 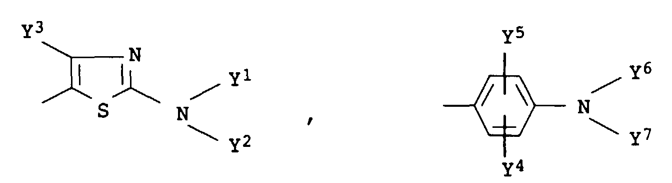 or 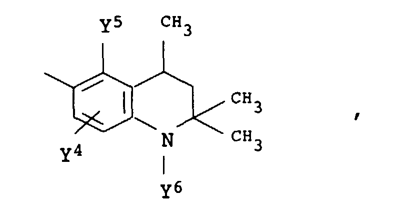
where
Y¹ and Y² are independently of each other C₁-C₁₀-alkyl with or without substitution by cyano, hydroxyl, halogen, C₁-C₄-alkanoyloxy, C₁-C₄-alkoxycarbonyl, C₁-C₄-alkoxycarbonyloxy, whose alkyl chain may in each case be interrupted by an oxygen atom in ether function, or phenyl and with or without interruption by from 1 to 4 oxygen atoms in ether function, C₅-C₇-cycloalkyl, C₃-C₄-alkenyl, unsubstituted or C₁-C₄-alkyl-, C₁-C₄-alkoxy-, halogen- or nitro-substituted phenyl, or Y¹ and Y² are together with the nitrogen atom joining them together a 5- or 6-membered saturated heterocyclic radical with or without further hetero atoms,
Y³ is C₃-C₁₀-alkyl, C₅-C₇-cycloalkyl, unsubstituted or C₁-C₄-alkyl-, C₁-C₄-alkoxy-, halogen- or nitro-substituted phenyl or thienyl,
Y⁴ is hydrogen, C₁-C₁₀-alkyl with or without interruption by from 1 to 4 oxygen atoms in ether function, hydroxyl, C₁-C₆-alkoxy, C₁-C₄-alkylsulfonylamino, mono- or di(C₁-C₈-alkyl)aminosulfonylamino or the radical -NHCOY⁸ or -NHCO₂Y⁸, where Y⁸ is phenyl, benzyl, tolyl or C₁-C₁₀-alkyl with or without interruption by from 1 to 4 oxygen atoms in ether function,
Y⁵ is hydrogen, C₁-C₆-alkyl or C₁-C₆-alkoxy, and
Y⁶ and Y⁷ are independently of each other hydrogen, C₁-C₁₀-alkyl, with or without substitution by cyano, hydroxyl, halogen, C₁-C₄-alkanoyloxy, C₁-C₄-alkoxycarbonyl, C₁-C₄-alkoxycarbonyloxy, whose alkyl chain may in each case be interrupted by an oxygen atom in ether function, or phenyl and with or without interruption by from 1 to 4 oxygen atoms in ether function, C₅-C₇-cycloalkyl, C₃-C₄-alkenyl, unsubstituted or C₁-C₄-alkyl-, C₁-C₄-alkoxy-, halogen- or nitro-substituted phenyl, or Y¹ and Y² are together with the nitrogen atom joining them together a 5- or 6-membered saturated heterocyclic radical with or without further hetero atoms.

2. Dye mixtures as claimed in claim 1 wherein R⁴ is methyl.

3. Dye mixtures as claimed in claim 1 wherein R³ is C₃-C₁₀-alkyl, phenyl or thienyl.

4. Dye mixtures as claimed in claim 1 wherein R⁶ is C₁-C₈-alkyl, cyclopentyl, cyclohexyl or unsubstituted or C₁-C₄-alkyl- or C₁-C₄-alkoxy-substituted phenyl.

5. Dye mixtures as claimed in claim 1 wherein R⁷ is C₁-C₈-alkyl or unsubstituted or C₁-C₄-alkyl- or C₁-C₄-alkoxy-substituted phenyl.

6. Dye mixtures as claimed in claim 1 wherein D is the radical of the formula IIIb, IIId, IIIe or IIIq.

7. Dye mixtures as claimed in claim 1 wherein D is a radical of the formula IIIb, IIId, IIIe or IIIq where
L¹ is nitro, cyano, C₁-C₄-alkoxycarbonyl, formyl or a radical of the formula -CH=T, where T is as defined in claim 1,
L² is hydrogen, C₁-C₆-alkyl or halogen,
L³ is cyano, C₁-C₆-alkoxycarbonyl or nitro,
L⁶ is cyano or nitro,
L⁷ is nitro, cyano, formyl, C₁-C₆-alkoxycarbonyl or a radical of the formula -CH=T, where T is as defined in claim 1,
L⁸ is C₁-C₆-alkyl, unsubstituted or C₁-C₄-alkyl-, C₁-C₄-alkoxy-, halogen- or nitro-substituted phenyl, cyano, halogen or C₁-C₆-alkoxycarbonyl,
L⁹ is unsubstituted or phenyl-substituted C₁-C₆-alkyl, unsubstituted or phenyl-substituted C₁-C₆-alkylthio, unsubstituted or C₁-C₄-alkyl-, C₁-C₄-alkoxy-, halogen- or nitro-substituted phenyl or thienyl, and
L¹⁵, L¹⁶ and L¹⁷ are independently of one another hydrogen, C₁-C₆-alkyl, C₁-C₆-alkoxy, nitro, cyano, unsubstituted or phenoxy-substituted C₁-C₆-alkoxycarbonyl, or L¹⁵ and L¹⁶ are together a radical of the formula CO-NW-CO, where W is as defined in claim 1.

8. Dye mixtures as claimed in claim 1 wherein Y¹, Y², Y⁶ and Y⁷ are independently of one another C₁-C₆-alkyl with or without substitution by hydroxyl, C₁-C₄-alkanoyloxy, C₁-C₄-alkoxycarbonyl, C₁-C₄-alkoxycarbonyloxy or phenyl and with or without interruption by 1 or 2 oxygen atoms in ether function.

9. Dye mixtures as claimed in claim 1 wherein Y³ is branched C₃-C₁₀-alkyl.

10. Dye mixtures as claimed in claim 1 wherein Y⁵ is hydrogen, C₁-C₄-alkyl, methoxy, ethoxy or C₁-C₆-alkanoylamino.

11. A process for transferring dyes from a transfer to a plastic-coated paper by diffusion or sublimation with the aid of an energy source, which comprises using a transfer on which there is a dye mixture as claimed in claim 1.

## Revendications

1. Mélanges de colorants contenant un ou plusieurs colorants de pyridone de formule I : 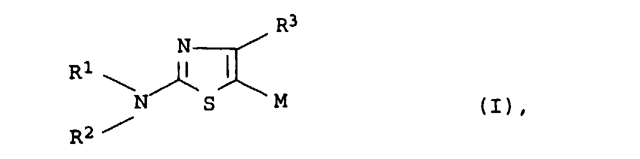 dans laquelle :
R¹ et R² représentent chacun indépendamment de l'autre un groupe alkyle en C₁-C₁₀, qui est éventuellement substitué par des substituants (alcoxy en C₁-C₄)carbonyle, (alcoxy en C₁-C₄)carbonyloxy, la chaîne alkyle de chacun d'eux pouvant être interrompue par un atome d'oxygène en fonction éther, ou encore phényle, et qui peut être interrompu par 1 à 4 atomes d'oxygène en fonction éther, cycloalkyle en C₅-C₇, alcényle en C₃-C₄, phényle éventuellement substitué par des substituants alkyle en C₁-C₄, alcoxy en C₁-C₄, halogéno ou nitro, ou encore R¹ et R², avec l'atome d'azote qui les relie, forment un noyau hétérocyclique saturé à 5 ou 6 chaînons, qui peut comporter des hétéroatomes supplémentaires,
R³ est un groupe alkyle en C₃-C₁₀, cycloalkyle en C₅-C₇, phényle ou thiényle éventuellement substitué par des substituants alkyle en C₁-C₄, alcoxy en C₁-C₄, halogéno ou nitro, et
M est un radical de formule : 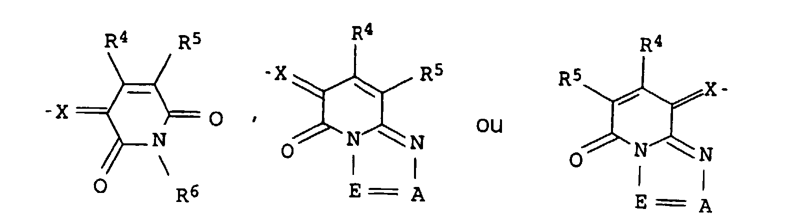
où :
X est CH,
R⁴ est un atome d'hydrogène, un groupe alkyle en C₁-C₆ ou phényle éventuellement substitué par des substituants alkyle en C₁-C₄, alcoxy en C₁-C₄, halogéno ou nitro,
R⁵ est un groupe cyano, carbamoyle, mono- ou di(alkyle en C₁-C₈)-carbamoyle, carboxyle, (alcoxy en C₁-C₈)carbonyle ou benzimidazolyle,
R⁶ est un atome d'hydrogène ou un groupe alkyle en C₁-C₁₀, qui est éventuellement substitué par des substituants phényle, phénoxy, cyclohexyloxy ou pyrazolyle, et qui peut être interrompu par 1 à 4 atomes d'oxygène en fonction éther, un groupe cycloalkyle en C₅-C₇, phényle éventuellement substitué par des substituants alkyle en C₁-C₄, alcoxy en C₁-C₄, halogéno ou nitro, ou encore un radical de formule NB¹B² dans laquelle B¹ et B² représentent chacun indépendamment de l'autre un atome d'hydrogène, un groupe alkyle en C₁-C₁₀, phényle éventuellement substitué par des substituants alkyle en C₁-C₄, alcoxy en C₁-C₄, halogéno ou nitro, un groupe alcanoyle en C₁-C₉, alkyl-sulfonyle en C₁-C₈, phénylsulfonyle éventuellement substitué par des substituants alkyle en C₁-C₄, alcoxy en C₁-C₄, halogéno ou nitro, un groupe pyridylsulfonyle, benzoyle éventuellement substitué par des substituants alkyle en C₁-C₄, alcoxy en C₁-C₄, halogéno ou nitro, un groupe pyridylcarbonyle ou thiénylcarbonyle, et
l'un des deux radicaux A et E est un atome d'azote et l'autre est un radical de formule C-R⁷ dans laquelle R⁷ représente un groupe alkyle en C₁-C₁₀, qui est éventuellement substitué par des substituants phényle, phénoxy, cyclohexyloxy ou pyrazolyle, et qui peut être interrompu par 1 à 4 atomes d'oxygènes en fonction éther, un groupe cycloalkyle en C₅-C₇ ou phényle éventuellement substitué par des substituants alkyle en C₁-C₄, alcoxy en C₁-C₄, halogéno ou nitro,
ainsi qu'un ou plusieurs colorants azoïques de formule II
D - N = N - K (II)
dans laquelle :
D est un radical de formule : 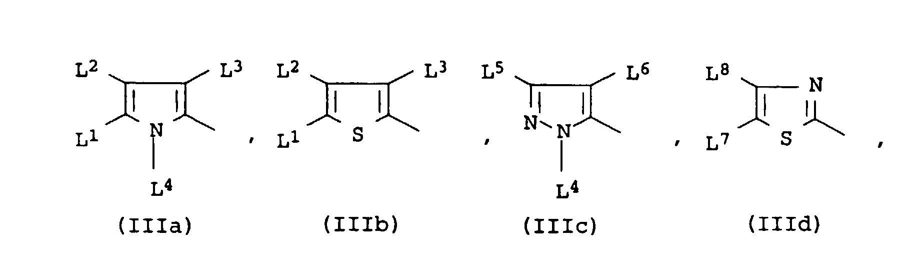 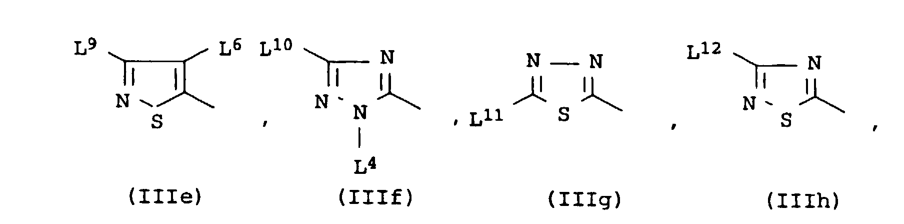 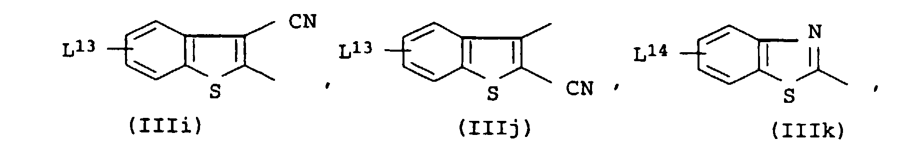 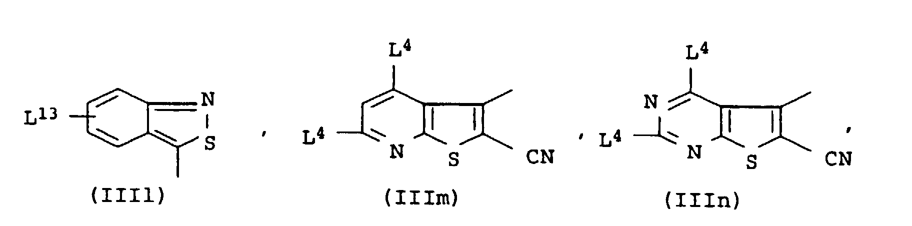 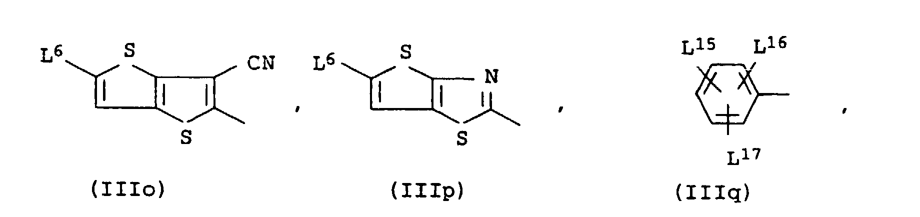 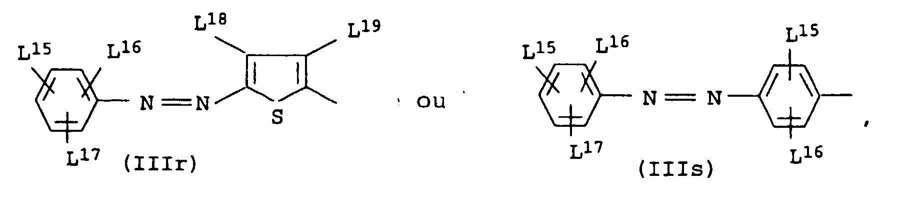
dans laquelle :
L¹ est un groupe nitro, cyano, alcanoyle en C₁-C₆, benzoyle, (alcoxy en C₁-C₈)carbonyle, alkylsulfonyle en C₁-C₈, phénylsulfonyle éventuellement substitué par des substituants alkyle en C₁-C₄, alcoxy en C₁-C₄, halogéno ou nitro, ou encore un radical de formule -CH=T dans laquelle T représente un groupe hydroxyimino, alcoxyimino en C₁-C₄, ou un radical d'un composé CH-acide H₂T,
L² est un atome d'hydrogène, un groupe alkyle en C₁-C₆, phényle éventuellement substitué par des substituants alkyle en C₁-C₄, alcoxy en C₁-C₄, halogéno ou nitro, un groupe halogéno, hydroxy, mercapto, un groupe alcoxy en C₁-C₆ éventuellement substitué par des substituants phényle ou alcoxy en C₁-C₄, un groupe phénoxy éventuellement substitué par des substituants alkyle en C₁-C₄, alcoxy en C₁-C₄, halogéno ou nitro, un groupe alkylthio en C₁-C₈ éventuellement substitué par le substituant phényle, un groupe phénylthio éventuellement substitué par des substituants alkyle en C₁-C₄, alcoxy en C₁-C₄, halogéno ou nitro, un groupe alkylsulfonyle en C₁-C₈ ou un groupe phénylsulfonyle éventuellement substitué par des substituants alkyle en C₁-C₄, alcoxy en C₁-C₄, halogéno ou nitro,
L³ est un groupe cyano, (alcoxy en C₁-C₈)carbonyle ou nitro,
L⁴ est un atome d'hydrogène ou un groupe alkyle en C₁-C₆, phényle ou tolyle,
L⁵ est un groupe alkyle en C₁-C₆, phényle ou tolyle,
L⁶ est un atome d'hydrogène ou un groupe cyano, (alcoxy en C₁-C₈)carbonyle, alcanoyle en C₁-C₆, thiocyanato, halogéno ou nitro,
L⁷ est un groupe nitro, cyano, alcanoyle en C₁-C₆, benzoyle, (alcoxy en C₁-C₈)carbonyle, alkylsulfonyle en C₁-C₈, phénylsulfonyle éventuellement substitué par des substituants alkyle en C₁-C₄, alcoxy en C₁-C₄, halogéno ou nitro, ou encore un radical de formule -CH=T dans laquelle T a les significations données ci-dessus,
L⁸ est un atome d'hydrogène, un groupe alkyle en C₁-C₆, un groupe phényle éventuellement substitué par des substituants alkyle en C₁-C₄, alcoxy en C₁-C₄, halogéno ou nitro, un groupement cyano, un atome d'halogène, un groupe alcoxy en C₁-C₆ éventuellement substitué par des substituants phényle ou alcoxy en C₁-C₄, un groupe alkylthio en C₁-C₈ éventuellement substitué par le substituant phényle, phénylthio éventuellement substitué par des substituants alkyle en C₁-C₄, alcoxy en C₁-C₄, halogéno ou nitro, un groupe alkylsulfonyle en C₁-C₈, un groupe phénylsulfonyle éventuellement substitué par des substituants alkyle en C₁-C₄, alcoxy en C₁-C₄, halogéno ou nitro, ou un groupe (alcoxy en C₁-C₈)carbonyle,
L⁹ est un groupe cyano, alkyle en C₁-C₆ éventuellement substitué par un substituant phényle, alcoxy en C₁-C₈ éventuellement substitué par un substituant phényle, alkylthio en C₁-C₈ éventuellement substitué par un substituant phényle, ou un groupe phényle, thiényle, alkylthiényle en C₁-C₄, pyridyle ou alkylpyridyle en C₁-C₄ éventuellement substitué par des substituants alkyle en C₁-C₄, alcoxy en C₁-C₄, halogéno ou nitro,
L¹⁰ est un groupe phényle, tolyle ou pyridyle,
L¹¹ est un groupe trifluorométhyle, nitro, alkyle en C₁-C₆, phényle, ou alkylthio en C₁-C₈ ou dialkylamino en C₁-C₆ éventuellement substitué par un substituant phényle,
L¹² est un groupe alkyle en C₁-C₆, phényle, ou encore un groupe alkylthio en C₁-C₈, 2-cyanoéthylthio ou 2-(alcoxycarbonyle en C₁-C₆)éthylthio éventuellement substitué par un substituant phényle,
L¹³ est un atome d'hydrogène ou un groupe nitro ou halogéno,
L¹⁴ est un atome d'hydrogène ou un groupe cyano, (alcoxy en C₁-C₈)-carbonyle, nitro ou halogéno,
L¹⁵, L¹⁶ et L¹⁷ représentent chacun indépendamment des autres un atome d'hydrogène, un groupe alkyle en C₁-C₆, alcoxy en C₁-C₆, halogéno, nitro, cyano, un groupe (alcoxy en C₁-C₈)carbonyle éventuellement substitué par un substituant phénoxy, un groupe alkylsulfonyle en C₁-C₈, ou un groupe phénylsulfonyle éventuellement substitué par des substituants alkyle en C₁-C₄, alcoxy en C₁-C₄, halogéno ou nitro, ou encore L¹⁵ et L¹⁶ forment ensemble un radical de formule CO-NW-CO dans laquelle W représente un groupe alkyle en C₁-C₁₀ pouvant être interrompu par 1 à 4 ou 2 atomes d'oxygène en fonction éther et qui est éventuellement substitué par un substituant hydroxy.
L¹⁸ est un atome d'hydrogène, le groupe méthyle ou chloro, et
L¹⁹ est un groupe cyano ou (alcoxy en C₁-C₈)carbonyle, et
K représente un radical de formule : 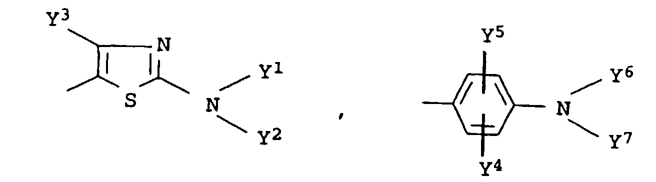 ou 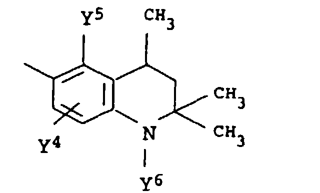
où :
Y¹ et Y² représentent chacun indépendamment de l'autre un groupe alkyle en C₁-C₁₀ qui est éventuellement substitué par des substituants cyano, hydroxy, halogéno, alcanoyloxy en C₁-C₄, (alcoxy en C₁-C₄)carbonyle, (alcoxy en C₁-C₄)carbonyloxy dont la chaîne latérale peut être interrompue par un atome d'oxygène en fonction éther, ou substituée par un groupe phényle, et qui peut être interrompu par 1 à 4 atomes d'oxygène en fonction éther, un groupe cycloalkyle en C₅-C₇, alcényle en C₃-C₄, un groupe phényle éventuellement substitué par des substituants alkyle en C₁-C₄, alcoxy en C₁-C₄, halogéno ou nitro, ou encore Y¹ et Y², avec l'atome d'azote qui les relie, forment un radical hétérocyclique saturé à 5 ou 6 chaînons qui peut encore porter des hétéroatomes supplémentaires,
Y³ est un groupe alkyle en C₃-C₁₀, cycloalkyle en C₅-C₇, phényle ou thiényle éventuellement substitué par des substituants alkyle en C₁-C₄, alcoxy en C₁-C₄, halogéno ou nitro,
Y⁴ est un atome d'hydrogène, un groupe alkyle en C₁-C₁₀ qui est éventuellement interrompu par 1 à 4 atomes d'oxygène en fonction éther, un groupe hydroxy, alcoxy en C₁-C₆, alkylsulfonylamino en C₁-C₄, mono- ou di(alkyle en C₁-C₈)aminosulfonylamino, ou encore le radical -NHCOY⁸ ou - NHCO₂Y⁸ où Y⁸ représente un groupe phényle, benzyle, tolyle ou alkyle en C₁-C₁₀ éventuellement interrompu par 1 à 4 atomes d'oxygène en fonction éther,
Y⁵ est un atome d'hydrogène, un groupe alkyle en C₁-C₆ ou alcoxy en C₁-C₆, et
Y⁶ et Y⁷ représentent chacun indépendamment de l'autre un atome d'hydrogène, un groupe alkyle en C₁-C₁₀, qui est éventuellement substitué par des substituants cyano, hydroxy, halogéno, alcanoyloxy en C₁-C₄, (alcoxy en C₁-C₄)carbonyle, (alcoxy en C₁-C₄)carbonyloxy dont la chaîne alkyle peut être interrompue par un atome d'oxygène en fonction éther, ou phényle, et qui peut être interrompue par 1 à 4 atomes d'oxygène en fonction éther, un groupe cycloalkyle en C₅-C₇, alcényle en C₃-C₄, phényle éventuellement substitué par des substituants alkyle en C₁-C₄, alcoxy en C₁-C₄, halogéno ou nitro, ou encore Y¹ et Y², avec l'atome d'azote qui les relie, forment un radical hétérocyclique saturé à 5 ou 6 chaînons qui peut comporter des hétéroatomes supplémentaires.

2. Mélanges de colorants selon la revendication 1, caractérisés en ce que R⁴ est le groupe méthyle.

3. Mélanges de colorants selon la revendication 1, caractérisés en ce que R³ est un groupe alkyle en C₃-C₁₀, phényle ou thiényle.

4. Mélanges de colorants selon la revendication 1, caractérisés en ce que R⁶ est un groupe alkyle en C₁-C₈, cyclopentyle, cyclohexyle, ou phényle éventuellement substitué par des substituants alkyle en C₁-C₄ ou alcoxy en C₁-C₄.

5. Mélanges de colorants selon la revendication 1, caractérisés en ce que R⁷ est un groupe alkyle en C₁-C₈ ou un groupe phényle éventuellement substitué par des substituants alkyle en C₁-C₄ ou alcoxy en C₁-C₄.

6. Mélanges de colorants selon la revendication 1, caractérisés en ce que D représente le radical de formule IIIb, IIId, IIIe ou IIIq.

7. Mélanges de colorants selon la revendication 1, caractérisés en ce que D est un radical de formule IIIb, IIId, IIIe ou IIIq, où :
L¹ est un groupe nitro, cyano, (alcoxy en C₁-C₄)carbonyle, formyle, ou un radical de formule -CH=T dans laquelle T a les significations données dans la revendication 1,
L² est un atome d'hydrogène ou un groupe alkyle en C₁-C₆ ou halogéno,
L³ est un groupe cyano, (alcoxy en C₁-C₆)carbonyle ou nitro,
L⁶ est un groupe cyano ou nitro,
L⁷ est un groupe nitro, cyano, formyle, (alcoxy en C₁-C₆)carbonyle, ou un radical de formule -C=T dans laquelle T a les significations données dans la revendication 1,
L⁸ est un groupe alkyle en C₁-C₆, un groupe phényle éventuellement substitué par des substituants alkyle en C₁-C₄, alcoxy en C₁-C₄, halogéno ou nitro, ou un groupe cyano, halogéno ou (alcoxy en C₁-C₆)carbonyle,
L⁹ est un groupe alkyle en C₁-C₆ éventuellement substitué par un substituant phényle, alkylthio en C₁-C₆ éventuellement substitué par un substituant phényle, phényle ou thiényle éventuellement substitué par des substituants alkyle en C₁-C₄, alcoxy en C₁-C₄, halogéno ou nitro, et
L¹⁵, L¹⁶ et L¹⁷ représentent chacun indépendamment des autres un atome d'hydrogène, un groupe alkyle en C₁-C₆, alcoxy en C₁-C₆, nitro, cyano, ou un groupe (alcoxy en C₁-C₆)carbonyle éventuellement substitué par un substituant phénoxy, ou encore L¹⁵ et L¹⁶ forment ensemble un radical de formule CO-NW-CO dans laquelle W a les significations données dans la revendication 1.

8. Mélanges de colorants selon la revendication 1, caractérisés en ce que Y¹, Y², Y⁶ et Y⁷ représentent chacun indépendamment des autres un groupe alkyle en C₁-C₆, qui est éventuellement substitué par des substituants hydroxy, alcanoyloxy en C₁-C₄, (alcoxy en C₁-C₄)carbonyle, (alcoxy en C₁-C₄)-carbonyloxy ou phényle, et qui peut être interrompu par 1 ou 2 atomes d'oxygènes en fonction éther.

9. Mélanges de colorants selon la revendication 1, caractérisés en ce que Y³ est un groupe alkyle en C₃-C₁₀ à chaîne ramifiée.

10. Mélanges de colorants selon la revendication 1, caractérisés en ce que Y⁵ est un atome d'hydrogène ou un groupe alkyle en C₁-C₄, méthoxy, éthoxy ou alcanoylamino en C₁-C₆.

11. Procédé pour transférer des colorants d'un support à un papier enduit de plastique, par diffusion ou sublimation à l'aide d'une source d'énergie, caractérisé en ce qu'on utilise un support sur lequel se trouve un mélange de colorants selon la revendication 1.
